(19) Europäisches Patentamt
European Patent Office
Office européen des brevets

(11) **EP 4 478 791 A1**

(12) **EUROPEAN PATENT APPLICATION**
published in accordance with Art. 153(4) EPC

(43) Date of publication:
**18.12.2024 Bulletin 2024/51**

(21) Application number: **23795360.9**

(22) Date of filing: **24.04.2023**

(51) International Patent Classification (IPC):
**H04W 52/02** (2009.01)

(52) Cooperative Patent Classification (CPC):
**H04W 52/02**

(86) International application number:
**PCT/CN2023/090419**

(87) International publication number:
**WO 2023/207927 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.04.2022 CN 202210462537
11.08.2022 CN 202210962007**

(71) Applicant: **Huawei Technologies Co., Ltd.
Shenzhen, Guangdong 518129 (CN)**

(72) Inventors:
• **CAO, Youlong
Shenzhen, Guangdong 518129 (CN)**

• **HUANG, Wenwen
Shenzhen, Guangdong 518129 (CN)**
• **CHEN, Erkai
Shenzhen, Guangdong 518129 (CN)**
• **XU, Rui
Shenzhen, Guangdong 518129 (CN)**
• **QIN, Yi
Shenzhen, Guangdong 518129 (CN)**
• **MI, Xiang
Shenzhen, Guangdong 518129 (CN)**

(74) Representative: **Maiwald GmbH
Engineering
Elisenhof
Elisenstrasse 3
80335 München (DE)**

(54) **ENERGY-SAVING METHOD AND APPARATUS, AND STORAGE MEDIUM**

(57)    A power saving method, an apparatus, and a storage medium are provided, to control a terminal device to appropriately skip performing PDCCH monitoring, so that the terminal device achieves a power saving effect on a basis that time for physical downlink control channel PDCCH monitoring matches transmission time of data of a service. The method includes: receiving first indication information from a network device, and skipping performing PDCCH monitoring in a first duration based on the first indication information, where the first duration is related to a periodicity or frame rate of data.

FIG. 10

**Description**

This application claims priority to Chinese Patent Application No. 202210462537.4, filed with the China National Intellectual Property Administration on April 28, 2022 and entitled "POWER SAVING METHOD, APPARATUS, AND STORAGE MEDIUM", and claims priority to Chinese Patent Application No. 202210962007.6, filed with the China National Intellectual Property Administration on August 11, 2022 and entitled "POWER SAVING METHOD, APPARATUS, AND STORAGE MEDIUM", which are incorporated herein by reference in their entireties.

**TECHNICAL FIELD**

This application relates to the field of communication technologies, and in particular, to a power saving method, an apparatus, and a storage medium.

**BACKGROUND**

In recent years, with development of communication technologies, extended reality (extended reality, XR) technologies are also continuously in progress and improvement. Currently, a procedure of transmission of a data frame of an XR service is generally as follows: The data frame is transmitted from a server to a fixed network/core network, and then to a base station, and the base station transmits the data frame to a terminal device.

In an ideal case, the XR service needs to periodically generate a data frame for transmission based on a frame rate, for example, 60 frames per second (frames per second, FPS). In other words, the data frame needs to be generated and transmitted based on a frame periodicity. However, due to coding processing performed by the server, transmission performed by the fixed network/core network, and other factors, the data frame of the XR service does not necessarily arrive at the base station strictly periodically. Consequently, when transmitting the data frame of the XR service to the terminal device, the base station does not necessarily perform transmission strictly based on the frame periodicity, and the terminal device may fail to receive the data frame strictly based on the frame periodicity.

In addition, in consideration of power saving, technologies in which the terminal device does not need to continuously perform physical downlink control channel (physical downlink control channel, PDCCH) monitoring are introduced in a long term evolution (long term evolution, LTE) system or a new radio (new radio, NR) system, for example, a PDCCH skipping (PDCCH skipping) technology and a discontinuous reception (discontinuous reception, DRX) technology. In these technologies, the terminal device does not need to perform PDCCH monitoring in specific time. However, currently, neither of the technologies can meet PDCCH monitoring time required by the terminal device to receive the data frame of the XR service.

Based on the above, how to control the terminal device to appropriately skip performing PDCCH monitoring, so that the terminal device achieves a power saving effect on a basis that time for PDCCH monitoring matches transmission time of the data frame of the XR service is an urgent problem to be resolved currently.

**SUMMARY**

Embodiments of this application provide a communication method, an apparatus, and a system, to control a terminal device to appropriately skip performing PDCCH monitoring, so as to resolve a problem that time in which a terminal device performs PDCCH monitoring does not match transmission time of a service.

To achieve the foregoing objective, the following technical solutions are used in embodiments of this application.

According to a first aspect, a communication method is provided. The method may be performed by a terminal device, or may be performed by a component (such as a processor, a chip, or a chip system) of the terminal device, or may be implemented by a logical module or software that can implement all or some functions of the terminal device. The method includes: receiving first indication information from a network device; and skipping performing PDCCH monitoring in a first duration based on the first indication information, where the first duration is related to a periodicity or frame rate of data.

According to the communication method provided in this embodiment of this application, the terminal device may skip performing, based on an indication of the first indication information, PDCCH monitoring in the first duration related to the periodicity or frame rate of the data. Different from an existing solution in which a duration for skipping performing PDCCH monitoring is not related to the periodicity or frame rate of the data, in the communication method provided in this embodiment of this application, the duration in which the terminal device skips performing PDCCH monitoring may be controlled to be related to the periodicity or frame rate of the data. Therefore, in a periodic data transmission scenario, time in which the terminal device performs PDCCH monitoring matches transmission time of the data.

With reference to the first aspect, in a possible design, the first duration is further related to at least one of the following: time at which the first indication information is received; or first reference time configured by the network device.

With reference to the first aspect, in a possible design, the first duration meets the following relationship: X=a+ceil [(b-a)/Δt]*Δt-b, where X represents the first duration, a represents the first reference time, ceil represents rounding up, b represents the time at which the first indication information is received, and Δt represents the periodicity of the data. This embodiment of this application provides a specific manner for determining the first duration.

With reference to the first aspect, in a possible design, the first duration meets the following relationship:

$$X=c+Int\{ceil[\frac{(d-c)*s}{y}]*\frac{y}{s}\}-d$$

, where X represents the first duration, c represents a slot index of the first reference time, Int represents rounding up or rounding down, ceil represents rounding up, d represents a slot index of the time at which the first indication information is received, y represents the periodicity of the data, and s represents a slot length. This embodiment of this application provides a specific manner for determining the first duration in a time unit of a slot.

With reference to the first aspect, in a possible design, the first duration meets the following relationship:

$$X=e+Int\{ceil[\frac{(f-e)*q}{p}]*\frac{p}{q}\}-f$$

, where X represents the first duration, e represents a subframe index of the first reference time, Int represents rounding up or rounding down, ceil represents rounding up, f represents a subframe index of the time at which the first indication information is received, p represents the periodicity of the data, and q represents a subframe length. This embodiment of this application provides a specific manner for determining the first duration in a time unit of a subframe.

With reference to the first aspect, in a possible design, the method further includes: receiving first configuration information from the network device, where the first indication information indicates to skip performing PDCCH monitoring in the first duration based on the first configuration information. According to the communication method provided in this embodiment of this application, the terminal device may be indicated, with reference to the first configuration information and the first indication information, to skip performing PDCCH monitoring in the first duration. This can reduce signaling that needs to be carried in the first indication information. In this way, signaling resources are reduced.

With reference to the first aspect, in a possible design, the PDCCH includes information for scheduling the data.

With reference to the first aspect, in a possible design, the periodicity of the data is z ms, where z is a non-integer. The communication method provided in this embodiment of this application may be applied to a scenario in which data of a service, for example, an XR service is transmitted in a non-integer periodicity.

According to a second aspect, a communication method is provided. The method may be performed by a network device, or may be performed by a component (such as a processor, a chip, or a chip system) of the network device, or may be implemented by a logical module or software that can implement all or some functions of a network device. The method includes: sending first indication information to a terminal device, where the first indication information indicates to skip performing PDCCH monitoring in a first duration, where the first duration is related to a periodicity or frame rate of data.

According to the communication method provided in this embodiment of this application, the terminal device may skip performing, based on an indication of the first indication information, PDCCH monitoring in the first duration related to the periodicity or frame rate of the data. Different from an existing solution in which a duration for skipping performing PDCCH monitoring is not related to the periodicity or frame rate of the data, in the communication method provided in this embodiment of this application, the duration in which the terminal device skips performing PDCCH monitoring may be controlled to be related to the periodicity or frame rate of the data. Therefore, in a periodic data transmission scenario, time in which the terminal device performs PDCCH monitoring matches transmission time of the data.

With reference to the second aspect, in a possible design, the first duration is further related to at least one of the following: time at which the first indication information is received; or first reference time configured by the network device.

With reference to the first aspect, in a possible design, the first duration meets the following relationship: X=a+ceil [(b-a)/Δt]*Δt-b, where X represents the first duration, a represents the first reference time, ceil represents rounding up, b represents the time at which the first indication information is received, and Δt represents the periodicity of the data. This embodiment of this application provides a specific manner for determining the first duration.

With reference to the second aspect, in a possible design, the first duration meets the following relationship:

$$X=c+Int\{ceil[\frac{(d-c)*s}{y}]*\frac{y}{s}\}-d$$

, where X represents the first duration, c represents a slot index of the first reference time, Int represents rounding up or rounding down, ceil represents rounding up, d represents a slot index of the time at which the first indication information is received, y represents the periodicity of the data, and s represents a slot length. This embodiment of this application provides a specific manner for determining the first duration in a time unit of a slot.

With reference to the second aspect, in a possible design, the first duration meets the following relationship:

$$X=e+Int\{ceil[\frac{(f-e)*q}{p}]*\frac{p}{q}\}-f$$

, where X represents the first duration, e represents a subframe index of the first reference time, Int represents rounding up or rounding down, ceil represents rounding up, f represents a subframe index of the time at which the first indication information is received, p represents the periodicity of the data, and q represents a subframe length. This embodiment of this application provides a specific manner for determining the first duration in a time unit of a subframe.

With reference to the second aspect, in a possible design, the method further includes: sending first configuration information to the terminal device, where the first indication information indicates to skip performing PDCCH monitoring in the first duration based on the first configuration information. According to the communication method provided in this embodiment of this application, the terminal device may be indicated, with reference to the first configuration information and the first indication information, to skip performing PDCCH monitoring in the first duration. This can reduce signaling that needs to be carried in the first indication information. In this way, signaling resources are reduced.

With reference to the second aspect, in a possible design, the PDCCH includes information for scheduling the data.

With reference to the second aspect, in a possible design, the periodicity of the data is z ms, where z is a non-integer. The communication method provided in this embodiment of this application may be applied to a scenario in which data of a service, for example, an XR service is transmitted in a non-integer periodicity.

According to a third aspect, a communication apparatus is provided, to implement the foregoing method. The communication apparatus includes a corresponding module, unit, or means (means) for implementing the foregoing method. The module, unit, or means may be implemented by hardware, software, or may be implemented by executing corresponding software by hardware. The hardware or the software includes one or more modules or units corresponding to the foregoing functions.

With reference to the third aspect, in a possible design, the communication apparatus includes: an interface module and a processing module. The interface module is configured to receive first indication information form the network device; and the processing module is configured to control, based on the first indication information, the apparatus to skip performing PDCCH monitoring in a first duration, where the first duration is related to a periodicity or frame rate of data.

With reference to the third aspect, in a possible design, the first duration is further related to at least one of the following: time at which the first indication information is received; or first reference time configured by the network device.

With reference to the third aspect, in a possible design, the first duration meets the following relationship: X=a+ceil[(b-a)/Δt]*Δt-b, where X represents the first duration, a represents the first reference time, ceil represents rounding up, b represents the time at which the first indication information is received, and Δt represents the periodicity of the data.

With reference to the third aspect, in a possible design, the first duration meets the following relationship:

$$X=c+Int\left\{ceil\left[\frac{(d-c)*s}{y}\right] * \frac{y}{s}\right\}-d$$, where X represents the first duration, c represents a slot index of the first reference time, Int represents rounding up or rounding down, ceil represents rounding up, d represents a slot index of the time at which the first indication information is received, y represents the periodicity of the data, and s represents a slot length.

With reference to the third aspect, in a possible design, the first duration meets the following relationship:

$$X=e+Int\left\{ceil\left[\frac{(f-e)*q}{p}\right] * \frac{p}{q}\right\}-f$$, where X represents the first duration, e represents a subframe index of the first reference time, Int represents rounding up or rounding down, ceil represents rounding up, f represents a subframe index of the time at which the first indication information is received, p represents the periodicity of the data, and q represents a subframe length.

With reference to the third aspect, in a possible design, the interface module is further configured to receive first configuration information from the network device, where the first indication information indicates to skip performing PDCCH monitoring in the first duration based on the first configuration information.

With reference to the third aspect, in a possible design, the PDCCH includes information for scheduling the data.

With reference to the third aspect, in a possible design, the periodicity of the data is z ms, where z is a non-integer.

For technical effects brought by any possible design of the third aspect, refer to technical effects brought by different designs of the first aspect. Details are not described herein again.

According to a fourth aspect, a communication apparatus is provided, to implement the foregoing method. The communication apparatus includes a corresponding module, unit, or means (means) for implementing the foregoing method. The module, unit, or means may be implemented by hardware, software, or may be implemented by executing corresponding software by hardware. The hardware or the software includes one or more modules or units corresponding to the foregoing functions.

With reference to the fourth aspect, in a possible design, the communication apparatus includes: an interface module. The interface module is configured to send first indication information to a terminal device, where the first indication information indicates to skip performing PDCCH monitoring in a first duration, where the first duration is related to a periodicity or frame rate of data.

With reference to the fourth aspect, in a possible design, the first duration is further related to at least one of the following: time at which the first indication information is received; or first reference time configured by the communication apparatus.

With reference to the fourth aspect, in a possible design, the first duration meets the following relationship: $X=a+\text{ceil}[(b-a)/\Delta t]*\Delta t-b$, where X represents the first duration, a represents the first reference time, ceil represents rounding up, b represents the time at which the terminal device receives the first indication information, and $\Delta t$ represents the periodicity of the data.

With reference to the fourth aspect, in a possible design, the first duration meets the following relationship:

$$X=c+\text{Int}\left\{\text{ceil}\left[\frac{(d-c)*s}{y}\right]*\frac{y}{s}\right\}-d$$

, where X represents the first duration, c represents a slot index of the first reference time, Int represents rounding up or rounding down, ceil represents rounding up, d represents a slot index of the time at which the terminal device receives the first indication information, y represents the periodicity of the data, and s represents a slot length.

With reference to the fourth aspect, in a possible design, the first duration meets the following relationship:

$$X=e+\text{Int}\left\{\text{ceil}\left[\frac{(f-e)*q}{p}\right]*\frac{p}{q}\right\}-f$$

, where X represents the first duration, e represents a subframe index of the first reference time, Int represents rounding up or rounding down, ceil represents rounding up, f represents a subframe index of the time at which the first indication information is received, p represents the periodicity of the data, and q represents a subframe length.

With reference to the fourth aspect, in a possible design, the interface module is further configured to send first configuration information to the terminal device, where the first indication information indicates to skip performing PDCCH monitoring in the first duration based on the first configuration information.

With reference to the fourth aspect, in a possible design, the PDCCH includes information for scheduling the data.

With reference to the fourth aspect, in a possible design, the periodicity of the data is z ms, where z is a non-integer.

For technical effects brought by any possible design of the fourth aspect, refer to technical effects brought by different designs of the second aspect. Details are not described herein again.

According to a fifth aspect, a communication apparatus is provided, including a processor, where the processor is coupled to a memory, the memory is configured to store a program or instructions, and when the program or the instructions are executed by the processor, the communication apparatus is enabled to perform the method according to any one of the foregoing aspects.

With reference to the fifth aspect, in a possible design, the communication apparatus further includes the memory.

With reference to the fifth aspect, in a possible design, the communication apparatus further includes a communication interface. The communication interface is used by the communication apparatus to communicate with another device. For example, the communication interface may be a transceiver, an input/output interface, an interface circuit, an output circuit, an input circuit, a pin, a related circuit, or the like.

With reference to the fifth aspect, in a possible design, the communication apparatus may be a chip or a chip system. When the communication apparatus is a chip system, the communication apparatus may include a chip, or may include a chip and another discrete device.

With reference to the fifth aspect, in a possible design, when the communication apparatus is a chip or a chip system, the communication interface may be an input/output interface, an interface circuit, an output circuit, an input circuit, a pin, a related circuit, or the like on the chip or the chip system. The processor may also be embodied as a processing circuit or a logic circuit.

According to a sixth aspect, a computer-readable storage medium is provided. The computer-readable storage medium stores computer instructions. When the computer instructions are run on a computer, the computer is enabled to perform the method according to any one of the foregoing aspects.

According to a seventh aspect, a computer program product including instructions is provided. When the computer program product is run on a computer, the computer is enabled to perform the method according to any one of the foregoing aspects.

For technical effects brought by any possible design of any one of the fifth aspect to the seventh aspect, refer to technical effects brought by different implementations of any one of the foregoing aspects. Details are not described herein again.

According to an eighth aspect, a communication system is provided, including the terminal device that performs the method according to the first aspect and the network device that performs the method according to the second aspect.

**BRIEF DESCRIPTION OF DRAWINGS**

FIG. 1 is a diagram of time at which a data frame of an XR service arrives at a network device;
FIG. 2 is a diagram of a DRX cycle;
FIG. 3 is a diagram of a monitoring periodicity;
FIG. 4 is a diagram of monitoring periodicities respectively corresponding to a sparse SSSG and a dense SSSG;
FIG. 5 is a diagram of arrival time of an XR service and an on Duration in a DRX cycle;
FIG. 6 is a diagram of a PDCCH skipping duration and a duration that is for skipping performing PDCCH monitoring and that is required by an XR service;
FIG. 7 is a diagram of an architecture of a communication system according to an embodiment of this application;
FIG. 8 is a diagram of structures of a network device and a terminal device according to an embodiment of this application;
FIG. 9 is another diagram of a structure of a terminal device according to an embodiment of this application;
FIG. 10 is an interaction diagram of a power saving method according to an embodiment of this application;
FIG. 11 is a diagram of determining a first duration according to an embodiment of this application;
FIG. 12 is an interaction diagram of a specific example of a power saving method according to an embodiment of this application;
FIG. 13 is an interaction diagram of a specific example of another power saving method according to an embodiment of this application;
FIG. 14 is a diagram of performing SSSG switching according to an embodiment of this application;
FIG. 15 is an interaction diagram of still another power saving method according to an embodiment of this application;
FIG. 16 is an interaction diagram of a specific example of still another power saving method according to an embodiment of this application;
FIG. 17 is a diagram of a structure of a communication apparatus according to an embodiment of this application; and
FIG. 18 is a diagram of a structure of another communication apparatus according to an embodiment of this application.

**DESCRIPTION OF EMBODIMENTS**

For ease of understanding the technical solutions in embodiments of this application, technologies related to this application are first briefly described as follows.

1. XR service

Currently, a procedure of transmission of a data frame of an XR service is generally as follows: The data frame is transmitted from a server to a fixed network/core network, and then to a base station, and the base station transmits the data frame to a terminal device. Generally, if the XR service is a video service, the data frame of the XR service may also be referred to as a picture frame or a video frame.

In an ideal case, the XR service needs to periodically generate a data frame for transmission based on a frame rate. In other words, the data frame needs to be generated and transmitted based on a frame periodicity. The frame periodicity may also be referred to as a periodicity of the XR service or a periodicity of data. Currently, a frame rate of the XR service is generally 60 frames per second (frames per second, FPS), 90 FPS, 120 FPS, 180 FPS, or the like. Therefore, a corresponding periodicity of the XR service is generally a non-integer. For example, if the frame rate is 60 FPS, a corresponding periodicity of the XR service is 16.67 ms, and the server generates and transmits one data frame every 16.67 ms.

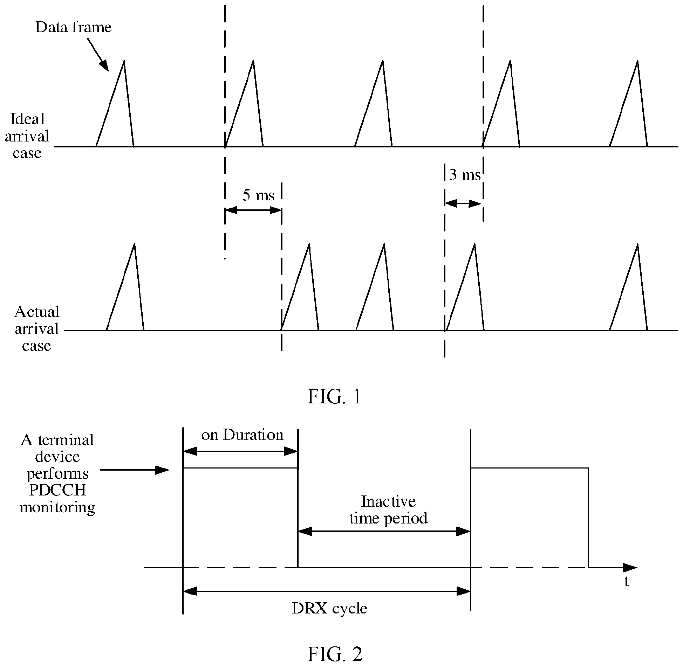

However, due to coding processing performed by the server, transmission performed by the fixed network/core network, and other factors, the data frame of the XR service does not necessarily arrive at the base station strictly periodically. As shown in FIG. 1, for a video with a frame rate of 60 FPS, a picture frame arrives at the base station every 16.67 ms in the ideal case. However, actually, a delay for each picture frame to arrive at the base station is different, and a frame interval is no longer strictly 16.67 ms. This case may be referred to as that a jitter (jitter) exists at an arrival moment of the frame. For example, as shown in FIG. 1, a 2nd frame arrives 5 ms later than that in the ideal case, that is, jitter=5 ms, and a 4th frame arrives 3 ms earlier than that in the ideal case, that is, jitter=-3 ms.

It may be understood that the data frame of the XR service does not necessarily arrive at the base station periodically. Consequently, when transmitting the data frame of the XR service to the terminal device, the base station does not necessarily perform transmission strictly based on the frame periodicity, and the terminal device may fail to receive the data frame strictly based on the frame periodicity.

2. DRX technology

The DRX technology is a technology introduced to reduce power consumption of a terminal device. A basic mechanism of the DRX technology is to configure a DRX cycle (DRX cycle) for the terminal device. The DRX cycle includes an active time period and an inactive time period. The terminal device normally performs PDCCH monitoring in the active time period, and enters a sleep state in the inactive time period without performing PDCCH monitoring, to reduce power consumption.

The active time period in the DRX cycle may also be referred to as an on Duration (on Duration/on Duration Timer). As shown in FIG. 2, the terminal device may monitor the PDCCH during the on Duration. After the on Duration expires, the terminal device enters the inactive time period and stops performing PDCCH monitoring until entering an on Duration of a next DRX cycle.

It can be learned from FIG. 2 that an interval between two consecutive on Durations is a duration of the DRX cycle. In a DRX cycle with a long duration, the terminal device sleeps for a long period of time, which helps reduce power consumption of the terminal device. In a DRX cycle with a short duration, the terminal device may respond more quickly to receive data. Therefore, to meet different requirements, two DRX cycles may be configured for the terminal device, namely, a short DRX cycle (shortDRX-Cycle) and a long DRX cycle (longDRX-Cycle), and the terminal device uses either of the DRX cycles at any moment.

It should be noted that the DRX cycle is generally configured by the base station for the terminal device, and the DRX cycle is generally an integer value.

3. Search space set (search space set, SS set)

To reduce power consumption caused by frequent PDCCH monitoring performed by a terminal device, a base station defines one or more search space sets for the terminal device. The search space set is a set of PDCCH monitoring occasions (monitoring occasions, MOs). The terminal device performs PDCCH monitoring at the MOs in the search space set configured by the base station, and does not need to perform PDCCH monitoring at a MO that is not included in the search space set, so that the power consumption is reduced.

The terminal device may perform PDCCH monitoring based on the following information included in search space: monitoringSlotPeriodicityAndOffset, duration, and monitoringSymbolsWithinSlot.

monitoringSlotPeriodicityAndOffset defines a periodicity of the search space and a start offset (offset) slot for PDCCH monitoring in the periodicity. duration defines a number of consecutive slots (slots) that correspond to the search space and in which monitoring needs to be performed in one periodicity of the search space. For example, if duration is equal to 2, it indicates that monitoring needs to be performed for two consecutive slots in one periodicity of the search space. monitoringSymbolsWithinSlot may define a symbol (symbol) on which PDCCH monitoring starts to be performed in one of the duration slots.

In this embodiment of this application, the method for PDCCH monitoring by using the search space set may also be referred to as PDCCH monitoring (PDCCH monitoring), and the periodicity of the search space may also be referred to as a periodicity of PDCCH monitoring, or referred to as a monitoring periodicity. Currently, the periodicity of PDCCH monitoring is generally an integer number of slots.

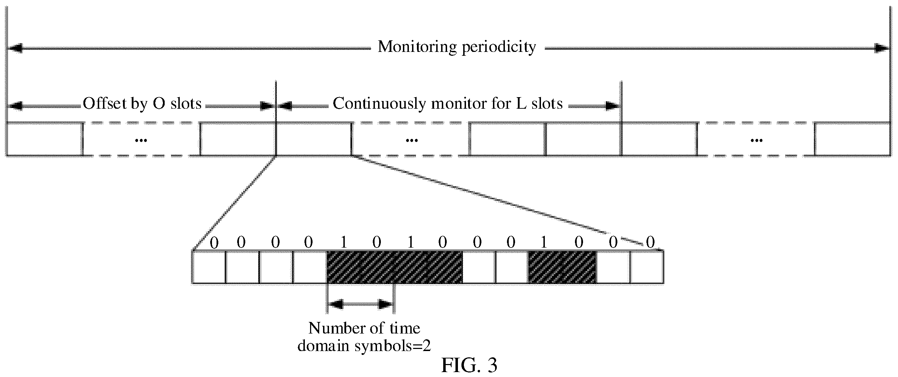

For example, as shown in FIG. 3, it is assumed that the monitoring periodicity includes k slots, there are O start offset slots, the duration is equal to L, and monitoringSymbolsWithinSlot indicates that PDCCH monitoring starts from a symbol 1 in the duration slots. In one monitoring periodicity, after the start offset slots, the terminal device continuously performs monitoring for L slots, and performs PDCCH monitoring in the slots based on a symbol indicated by monitoringSymbolsWithinSlot. The terminal device may not perform monitoring in remaining time until a next monitoring periodicity. In addition, a number of symbols that correspond to PDCCH monitoring and that are represented by shadow parts in FIG. 3 and a frequency domain range for PDCCH monitoring are defined by a control channel resource set (coreset) associated with search space.

Further, the search space sets may belong to different search space set groups (search space set groups, SSSGs). The SSSG is configured by the base station for the terminal device, for example, information such as search space included in the SSSG. The base station further configures, for the terminal device, a PDCCH monitoring-related configuration corresponding to the SSSG. The terminal device may perform PDCCH monitoring in the search space in the SSSG based on the PDCCH monitoring-related configuration corresponding to the SSSG. The base station may configure the SSSG for the terminal device via radio resource control (radio resource control, RRC) signaling.

The SSSG may be classified into a sparse SSSG (sparse SSSG) and a dense SSSG (dense SSSG) based on the PDCCH monitoring-related configuration corresponding to the SSSG configured by the base station for the terminal device. Compared with the dense SSSG, in the sparse SSSG, the PDCCH is monitored more sparsely. For example, it is assumed that an SSSG 0 is configured as that PDCCH monitoring is performed at an interval of three slots, and an SSSG 1 is configured as that PDCCH monitoring needs to be performed in each slot. The SSSG 0 may be referred to as a sparse SSSG, and the SSSG 1 may be referred to as a dense SSSG.

Configurations of the sparse SSSG and the dense SSSG, and PDCCH monitoring-related configurations respectively corresponding to the sparse SSSG and the dense SSSG may be determined based on implementation of the base station.

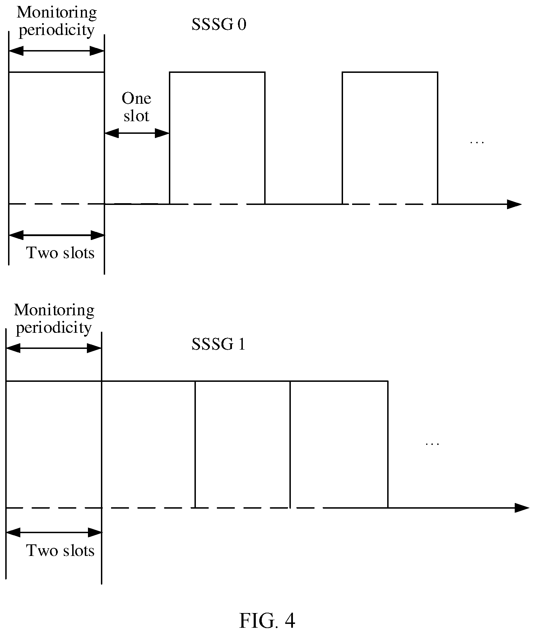

For example, for ease of understanding, descriptions are provided below with reference to FIG. 4. It is assumed that the base station configures an SSSG 0 and an SSSG 1 for the terminal device. The SSSG 0 is configured as that PDCCH monitoring is performed at an interval of one slot, and the SSSG 1 is configured as that PDCCH monitoring needs to be performed in each slot. Monitoring periodicities of search space sets in the SSSG 0 and the SSSG 1 are configured as two slots. As shown in FIG. 4, when the terminal device performs PDCCH monitoring in the search space set in the SSSG 0, a first monitoring periodicity includes a slot 0 and a slot 1, a second monitoring periodicity includes a slot 3 and a slot 4, and another monitoring periodicity can be deduced by analogy. When the terminal device performs PDCCH monitoring in the search space set in the SSSG 1, a first monitoring periodicity includes a slot 0 and a slot 1, a second monitoring periodicity includes a slot 2 and a slot 3, and another monitoring periodicity can be deduced by analogy. For a specific implementation in which the terminal device performs PDCCH monitoring in the monitoring periodicity, refer to the foregoing descriptions. It can be learned from FIG. 4 that time for PDCCH monitoring in the SSSG 0 is sparser, and time for PDCCH monitoring in the SSSG 1 is denser. Therefore, the SSSG 0 may be referred to as a sparse SSSG, and the SSSG 1 may be referred to as a dense SSSG.

Switching between search space set groups (SSSG switching) may be indicated based on downlink control information (downlink control information, DCI). For example, a PDCCH monitoring adaptation indication (PDCCH monitoring adaptation indication) field (including one or two bits) is added to the DCI, and the PDCCH monitoring adaptation indication field indicates whether the terminal device performs search space set group switching. When the PDCCH monitoring adaptation indication field includes one bit, and the base station configures two SSSGs for the terminal device, user equipment behaviors (user equipment behaviors, UE behaviors) indicated by the PDCCH monitoring adaptation indication field may be shown in Table 1 below:

**Table 1**

| PDCCH monitoring adaptation indication field | Indicated user equipment behaviors |
|---|---|
| Bit value of "0" | Start to perform PDCCH monitoring in search space in an SSSG 0, and stop monitoring in search space in an SSSG 1 |
| Bit value of "1" | Start to perform PDCCH monitoring in search space in an SSSG 1, and stop monitoring in search space in an SSSG 0 |

When the PDCCH monitoring adaptation indication field includes two bits, and the base station configures three SSSGs for the terminal device, user equipment behaviors indicated by the PDCCH monitoring adaptation indication field may be shown in Table 2 below:

**Table 2**

| PDCCH monitoring adaptation indication field | Indicated user equipment behaviors |
|---|---|
| Bit value of "00" | Start to perform PDCCH monitoring in search space in an SSSG 0, and stop monitoring in search space in another SSSG |
| Bit value of "01" | Start to perform PDCCH monitoring in search space in an SSSG 1, and stop monitoring in search space in another SSSG |
| Bit value of "10" | Start to perform PDCCH monitoring in search space in an SSSG 2, and stop monitoring in search space in another SSSG |
| Bit value of "11" | Reserved (indicating that no user equipment behavior is needed currently based on the bit value) |

In addition to indicating the SSSG switching via the DCI, the SSSG switching may be further performed based on a timer. For example, the base station may configure a search space switching timer (search space switching timer) in RRC signaling. After the timer expires, a user switches from SSSG X (X=1, 2) to the SSSG 0. A purpose of the search space switching timer may be understood as that the terminal device switches from one SSSG to another SSSG after the timer expires, and the search space switching timer may also be referred to as an SSSG switching timer.

4. PDCCH skipping (skipping)

To enable a terminal device to skip some additional PDCCHs that do not need to be monitored, to further reduce power consumption of the terminal device, the terminal device may support PDCCH skipping. For example, a PDCCH monitoring adaptation indication (PDCCH monitoring adaptation indication) field (including one or two bits) may be included in DCI, and the PDCCH monitoring adaptation indication field indicates a duration in which the terminal device needs to skip performing PDCCH monitoring.

User equipment behaviors indicated by the PDCCH monitoring adaptation indication field may be shown in Table 3 below:

**Table 3**

| PDCCH monitoring adaptation indication field | Indicated user equipment behaviors |
|---|---|
| One bit with a bit value of "0"; or two bits with a bit value of "00" | Perform PDCCH monitoring |
| One bit with a bit value of "1"; or two bits with a bit value of "01" | Skip performing PDCCH monitoring in a duration corresponding to a $1^{st}$ value in an on Duration set |
| Two bits with a bit value of "10" | Skip performing PDCCH monitoring in a duration corresponding to a $2^{nd}$ value in an on Duration set |
| Two bits with a bit value of "11" | Skip performing PDCCH monitoring in a duration corresponding to a $3^{rd}$ value in an on Duration set |

Table 3 is used as an example for explanation. For example, if the PDCCH monitoring adaptation indication field includes two bits and has a bit value of "01 ", after receiving the DCI, the terminal device skips performing PDCCH monitoring in the duration corresponding to the $1^{st}$ value in the on Duration set. A value in the on Duration set, in other words, a candidate duration in which the terminal device may skip performing PDCCH monitoring (candidate PDCCH skipping duration) is configured by using a PDCCH Skipping DurationList-r17 (PDCCH Skipping DurationList-r17) field in the RRC signaling. As shown in Table 3, at most three candidate PDCCH skipping durations may be configured by using the PDCCH Skipping DurationList-r17 field.

It should be noted that, currently, the candidate PDCCH skipping duration that can be configured by using the PDCCH Skipping DurationList-r17 field is at a granularity of a slot. In other words, currently, the candidate PDCCH skipping duration that can be configured by using the PDCCH Skipping DurationList-r17 field is generally an integer number of slots.

In conclusion, in a PDCCH skipping technology, after receiving the DCI, the terminal device determines, based on the PDCCH monitoring adaptation indication field in the DCI, which PDCCH skipping duration configured by using the PDCCH Skipping DurationList-r17 field is indicated, so as to skip performing PDCCH monitoring in the corresponding duration.

It should be noted that, when the PDCCH monitoring adaptation indication field includes two bits, and the base station configures two SSSGs and two candidate PDCCH skipping durations for the terminal device, user equipment behaviors indicated by the PDCCH monitoring adaptation indication field may be shown in Table 4 below:

**Table 4**

| PDCCH monitoring adaptation indication field | Indicated user equipment behaviors |
|---|---|
| Bit value of "00" | Start to perform PDCCH monitoring in search space in an SSSG 0, and stop monitoring in search space in an SSSG 1 |
| Bit value of "01" | Start to perform PDCCH monitoring in search space in an SSSG 1, and stop monitoring in search space in an SSSG 0 |
| Bit value of "10" | Skip performing PDCCH monitoring in a duration corresponding to a $1^{st}$ value in an on Duration set |
| Bit value of "11" | Skip performing PDCCH monitoring in a duration corresponding to a $2^{nd}$ value in an on Duration set |

The foregoing describes the XR service and technologies in which the terminal device does not need to continuously perform PDCCH monitoring for power saving: DRX, PDCCH monitoring, and PDCCH skipping. However, none of these technologies can meet PDCCH monitoring time required by the terminal device to receive the data frame of the XR service. Detailed descriptions are provided below.

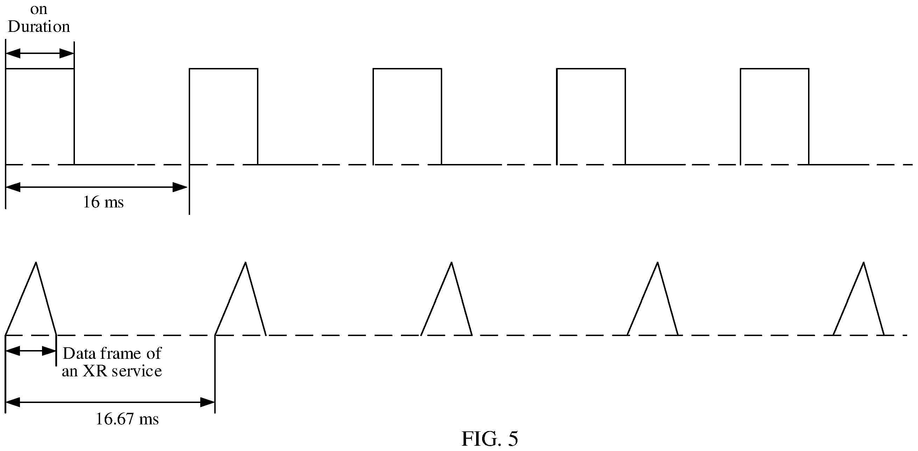

1. In the DRX technology, the terminal device periodically performs PDCCH monitoring. However, the DRX cycle is generally an integer value, and does not match a non-integer periodicity value of the XR service. For example, assuming that a frame rate of the XR service is 60 FPS, a corresponding periodicity is 16.67 ms, and a DRX cycle closest to the frame periodicity is 16 ms. As shown in FIG. 5, arrival time of the XR service and an on Duration in the DRX cycle are gradually staggered. In addition, a jitter may still exist at the arrival time of the data frame of the XR service. To enable the data frame to be scheduled in time after arriving at the base station, an on Duration length needs to be set to cover an entire jitter range. For example, a possible value of a jitter meets -4 ms≤jitter≤4 ms, the data frame may arrive up to 4 ms earlier and up to 4 ms later than the ideal arrival time. In this case, the on Duration needs to be set to 8 ms. However, for the XR service with the frame rate of 60 FPS, a DRX cycle closest to a periodicity of data is 16 ms. In this case, the terminal device needs to perform PDCCH monitoring in nearly half of the periodicity. Consequently, power consumption of the terminal device is excessively high.

2. Similar to a reason why the DRX technology cannot meet a PDCCH monitoring occasion required by the terminal device to receive the data frame of the XR service, when a slot is used as a time unit, a periodicity of PDCCH monitoring is generally an integer number of slots, and a periodicity of the XR service is generally a non-integer number of slots. In this case, a periodicity value of PDCCH monitoring does not match a periodicity value of the XR service. In addition, because a jitter may exist in the arrival time of the data frame of the XR service, the terminal device needs to perform PDCCH monitoring for a very long period of time.

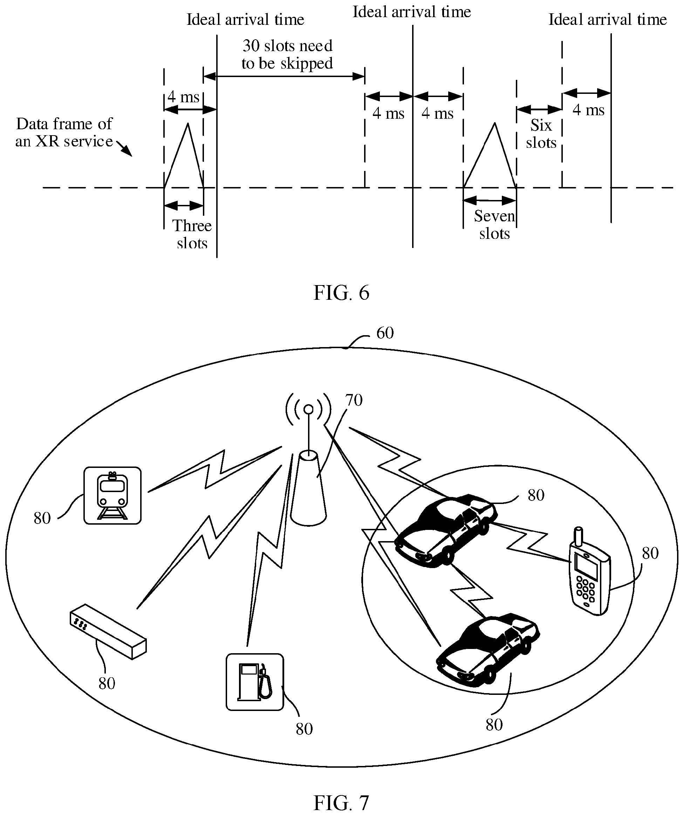

3. A PDCCH skipping duration supports at most three values in a unit of a slot. For the XR service, due to a jitter, a variable frame size, a scheduling policy, and other reasons, a duration in which PDCCH monitoring actually needs to be skipped for the XR service varies in a wide range, the PDCCH skipping duration with at most three values cannot meet actual requirements of the XR service. The following uses a specific example for explanation. As shown in FIG. 6, it is assumed that the terminal device is configured to continuously perform PDCCH monitoring, a frame rate of the XR service is 60 FPS, and a jitter range meets -4 ms≤jitter≤4 ms. A range of a duration in which the terminal device may skip performing PDCCH monitoring is shown in FIG. 6. A possible largest range is as follows: The data frame arrives 4 ms earlier than the ideal arrival time, and transmission of the data frame is completed in three slots. If calculation is performed at a millisecond granularity, a duration in which the terminal device needs to skip performing PDCCH monitoring is calculated as follows: 16.67-1.5=15.17 ms, and the duration is 30 slots when being converted into a slot unit. A possible smallest range is as follows: The data frame arrives 4 ms later than the ideal arrival time. Due to a frame size or retransmission, transmission of the data frame is completed in a total of seven slots. In this case, a duration in which the terminal device needs to skip performing PDCCH monitoring is calculated as follows: 8.67-3.5=3.17 ms, and the duration is 6 slots when being converted into a slot unit. It can be learned that the duration in which the terminal device needs to skip performing PDCCH monitoring is in a range of 6 slots to 30 slots, and there are a total of 25 length ranges in a unit of a slot. However, at most three candidate durations for PDCCH skipping in a unit of a slot can be configured via the RRC signaling, a change status of the duration that is for skipping performing PDCCH monitoring and that is required by the XR service cannot be met.

Based on the above, how to control the terminal device to skip performing PDCCH monitoring, so that the terminal device achieves a power saving effect on a basis that time for PDCCH monitoring matches transmission time of the data frame of the XR service is an urgent problem to be resolved currently. Base on this, embodiments of this application provide a power saving method, to appropriately control time in which the terminal device skips performing PDCCH monitoring, so that time in which the terminal device performs PDCCH monitoring matches the transmission time of the data frame of the XR service.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The power saving method provided in embodiments of this application may be applied to various communication systems. For example, the power saving method provided in embodiments of this application may be applied to a long term evolution (long term evolution, LTE) system, a 5th generation (5th generation, 5G) system, or another future-oriented similar new system. This is not specifically limited in this embodiment of this application. In addition, the terms "system" and "network" may be interchangeable.

FIG. 7 is a communication system 60 according to an embodiment of this application. The communication system 60 includes a network device 70 and one or more terminal devices 80 connected to the network device 70. The terminal device 80 is connected to the network device 70 in a wireless manner. Optionally, different terminal devices 80 may communicate with each other. The terminal device 80 may be located at a fixed position, or may be mobile.

It should be noted that FIG. 7 is merely a diagram. Although not shown, another network device may further be included in the communication system 60. For example, the communication system 60 may further include one or more of the following: a core network device, a wireless relay device, and a wireless backhaul device. This is not specifically limited herein. The network device may be connected to the core network device in a wireless or wired manner. The core network device and the network device 70 may be different independent physical devices, or functions of the core network device and logical functions of the network device 70 may be integrated into a same physical device, or a part of functions of the core network device and a part of functions of the network device 70 may be integrated into one physical device. This is not specifically limited in this embodiment of this application.

For example, the network device 70 shown in FIG. 7 interacts with any terminal device 80. In the power saving method provided in embodiments of this application, the network device 70 is configured to send first indication information to a terminal device 80, and the terminal device 80 is configured to skip performing PDCCH monitoring in a first duration based on the first indication information, where the first duration is related to a periodicity or frame rate of data. Specific implementation and technical effects of the solution are described in detail in subsequent method embodiments, and details are not described herein again.

Optionally, the network device 70 in this embodiment of this application is a device for connecting the terminal device 80 to a wireless network, and may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a wireless-fidelity (wireless-fidelity, Wi-Fi) system, or the like; or may be a module or a unit that implements some functions of a base station, for example, may be a central unit (central unit, CU), or may be a distributed unit (distributed unit, DU). A specific technology and a specific device form that are used by the network device are not limited in embodiments of this application. All or some functions of the network device in this application may alternatively be implemented by using a software function running on hardware, or may be implemented by using an instantiated virtualization function on a platform (for example, a cloud platform). In this application, unless otherwise specified, the network device is a radio access network device.

Optionally, the terminal device 80 in embodiments of this application may be a device configured to implement a wireless communication function, for example, a terminal or a chip that may be used in the terminal. The terminal may also be referred to as user equipment (user equipment, UE), a mobile station, a mobile terminal, or the like. The terminal may be a mobile phone, a tablet computer, a computer with a wireless transceiver function, a virtual reality terminal device, an augmented reality terminal device, a wireless terminal in industrial control, a wireless terminal in self driving, a wireless terminal in remote surgery, a wireless terminal in a smart grid, a wireless terminal in transportation safety, a wireless terminal in a smart city, a wireless terminal in a smart home, and the like. A specific technology and a specific device form that are used by the terminal device are not limited in embodiments of this application. All or some functions of the terminal device in this application may alternatively be implemented by using a software function running on hardware, or may be implemented by using an instantiated virtualization function on a platform (for example, a cloud platform).

Optionally, in embodiments of this application, the network device 70 and the terminal device 80 may be deployed on the land, including an indoor device, an outdoor device, a handheld device, or a vehicle-mounted device; may be deployed on the water; or may be deployed on an airplane, a balloon, and a satellite in the air. Application scenarios of the network device 70 and the terminal device 80 are not limited in embodiments of this application.

Optionally, the network device 70 and the terminal device 80 in this embodiment of this application may communicate with each other on a licensed spectrum, may communicate with each other on an unlicensed spectrum, or may communicate with each other on both a licensed spectrum and an unlicensed spectrum. The network device 70 and the terminal device 80 may communicate with each other on a spectrum below 6 gigahertz (gigahertz, GHz), may communicate with each other on a spectrum above 6 GHz, or may communicate with each other on both a spectrum below 6 GHz and a spectrum above 6 GHz. A spectrum resource used between the network device 70 and the terminal device 80 is not limited in embodiments of this application.

Optionally, the network device 70 and the terminal device 80 in this embodiment of this application may also be referred to as communication apparatuses, and each may be a general-purpose device or a dedicated device. This is not specifically limited in this embodiment of this application.

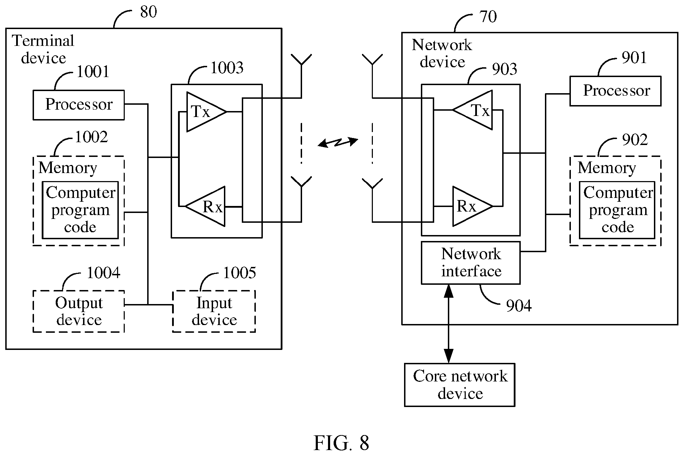

Optionally, FIG. 8 is a diagram of structures of a network device 70 and a terminal device 80 according to an embodiment of this application.

The terminal device 80 includes at least one processor 1001 and at least one transceiver 1003. Optionally, the terminal device 80 may further include at least one memory 1002, at least one output device 1004, or at least one input device 1005.

The processor 1001, the memory 1002, and the transceiver 1003 are connected through a communication line. The communication line may include a path for transmitting information between the foregoing components.

The processor 1001 may be a general-purpose central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The general-purpose processor may be a microprocessor or any conventional processor. During specific implementation, in an embodiment, the processor 1001 may include a plurality of CPUs, and the processor 1001 may be a single-core processor or a multi-core processor. The processor herein may be one or more devices, circuits, or processing cores configured to process data.

The memory 1002 may be an apparatus with a storage function. For example, the memory 1002 may be a read-only memory (read-only memory, ROM) or another type of static storage device that can store static information and instructions, a random access memory (random access memory, RAM), or another type of dynamic storage device that can store information and instructions, or may be a programmable ROM (programmable ROM, PROM), an erasable PROM (erasable PROM, EPROM), an electrically erasable programmable read-only memory (electrically erasable programmable read-only memory, EEPROM), a compact disc read-only memory (compact disc read-only memory, CD-ROM) or other optical disk storage, optical disk storage (including a compact disc, a laser disc, an optical disc, a digital versatile disc, a Blu-ray disc, and the like), a magnetic disk storage medium or another magnetic storage device, or any other medium that can be configured to carry or store desired program code in a form of an instruction or a data structure and that can be accessed by a computer, but is not limited thereto. The memory 1002 may exist independently, and is connected to the processor 1001 through a communication line. Alternatively, the memory 1002 and the processor 1001 may be integrated together.

The memory 1002 is configured to store computer-executable instructions for executing the solution of this application, and the processor 1001 controls execution of the computer-executable instructions. Specifically, the processor 1001 is configured to execute the computer-executable instructions stored in the memory 1002, to implement the power saving method in embodiments of this application.

Alternatively, optionally, in this embodiment of this application, the processor 1001 may perform a processing-related function in the power saving method provided in the following embodiment of this application, and the transceiver 1003 is responsible for communicating with another device or a communication network. This is not specifically limited in this embodiment of this application.

Optionally, the computer-executable instructions in this embodiment of this application may also be referred to as application program code or computer program code. This is not specifically limited in this embodiment of this application.

The transceiver 1003 may use any apparatus such as a transceiver, and is configured to communicate with another device or a communication network, for example, an Ethernet, a radio access network (radio access network, RAN), or a wireless local area network (wireless local area networks, WLAN). The transceiver 1003 includes a transmitter (transmitter, Tx) and a receiver (receiver, Rx).

The output device 1004 communicates with the processor 1001, and may display information in a plurality of manners. For example, the output device 1004 may be a liquid crystal display (liquid crystal display, LCD), a light emitting diode (light emitting diode, LED) display device, a cathode ray tube (cathode ray tube, CRT) display device, a projector (projector), or the like.

The input device 1005 communicates with the processor 1001, and may receive user input in a plurality of manners. For example, the input device 1005 may be a mouse, a keyboard, a touchscreen device, or a sensor device.

The network device 70 includes at least one processor 901, at least one transceiver 903, and at least one network interface 904. Optionally, the network device 70 may further include at least one memory 902. The processor 901, the memory 902, the transceiver 903, and the network interface 904 are connected through a communication line. The network interface 904 is configured to connect to a core network device through a link (for example, an S 1 interface), or connect to a network interface of another network device through a wired or wireless link (for example, an X2 interface) (not shown in FIG. 8). This is not specifically limited in this embodiment of this application. In addition, for related descriptions of the processor 901, the memory 902, and the transceiver 903, refer to descriptions of the processor 1001, the memory 1002, and the transceiver 1003 in the terminal device 80. Details are not described herein again.

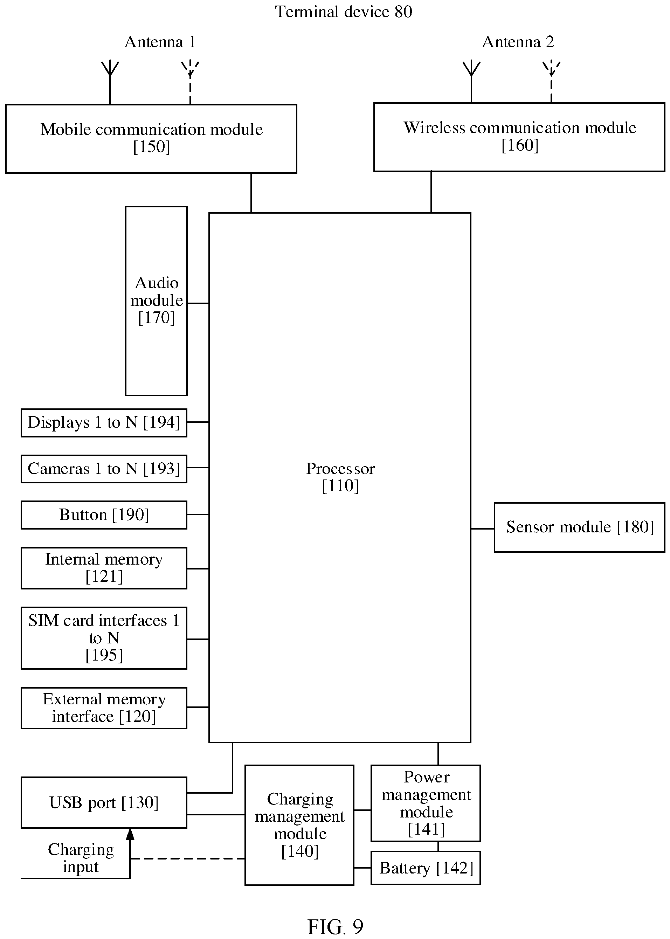

With reference to the diagram of the structure of the terminal device 80 shown in FIG. 8, for example, FIG. 9 is a specific structural form of the terminal device 80 according to an embodiment of this application.

In some embodiments, a function of the processor 1001 in FIG. 8 may be implemented by a processor 110 in FIG. 9.

In some embodiments, a function of the transceiver 1003 in FIG. 8 may be implemented through an antenna 1, an antenna 2, a mobile communication module 150, a wireless communication module 160, and the like in FIG. 9. The mobile communication module 150 may provide a solution that is applied to the terminal device 80 and that includes a wireless communication technology such as LTE, NR, or future mobile communication. The wireless communication module 160 may provide a solution that is applied to the terminal device 80 and that includes a wireless communication technology such as WLAN (for example, a Wi-Fi network), Bluetooth (Bluetooth, BT), a global navigation satellite system (global navigation satellite system, GNSS), frequency modulation (frequency modulation, FM), near field communication (near field communication, NFC), infrared, or the like. In some embodiments, in the terminal device 80, the antenna 1 is coupled to the mobile communication module 150, and the antenna 2 is coupled to the wireless communication module 160, so that the terminal device 80 can communicate with a network and another device by using a wireless communication technology.

In some embodiments, a function of the memory 1002 in FIG. 8 may be implemented through an internal memory 121 in FIG. 9, an external memory connected to an external memory interface 120, or the like.

In some embodiments, a function of the output device 1004 in FIG. 8 may be implemented through a display 194 in FIG. 9.

In some embodiments, a function of the input device 1005 in FIG. 8 may be implemented through a mouse, a keyboard, a touchscreen device, or a sensor module 180 in FIG. 9.

In some embodiments, as shown in FIG. 9, the terminal device 80 may further include one or more of an audio module 170, a camera 193, a button 190, a SIM card interface 195, a USB interface 130, a charging management module 140, a power management module 141, and a battery 142.

It may be understood that the structure shown in FIG. 9 does not constitute a specific limitation on the terminal device 80. For example, in some other embodiments of this application, the terminal device 80 may include more or fewer components than those shown in the figure, or some components may be combined, or some components may be split, or different component arrangement may be used. The components shown in the figure may be implemented by hardware, software, or a combination of software and hardware.

With reference to FIG. 1 to FIG. 9, the power saving method provided in embodiments of this application is described in detail below by using an example in which the network device 70 and any terminal device 80 shown in FIG. 7 interact with each other.

It should be noted that names of messages between network elements, names of parameters in the messages, or the like in the following embodiments of this application are merely examples, and there may be other names in a specific implementation. This is not specifically limited in embodiments of this application.

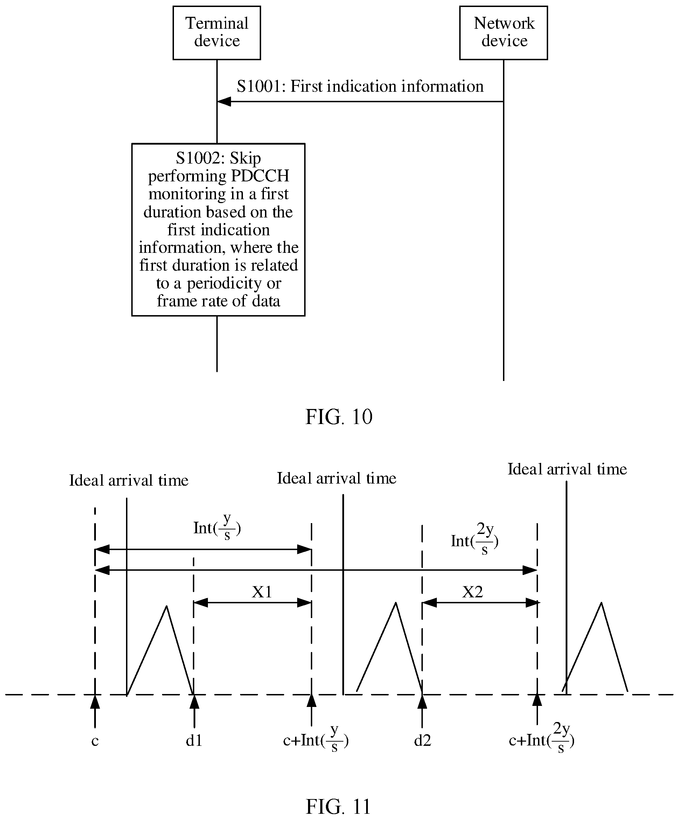

FIG. 10 is a power saving method according to an embodiment of this application. In FIG. 10, the method is described by using an example in which a network device and a terminal device are entities for performing interaction. However, the entities for performing interaction are not limited in this application. For example, the network device in FIG. 10 may alternatively be a chip, a chip system, or a processor that supports the network device in implementing the method, or may be a logical module or software that can implement all or some functions of the network device. The terminal device in FIG. 10 may alternatively be a chip, a chip system, or a processor that supports the terminal device in implementing the method, or may be a logical module or software that can implement all or some functions of the terminal device. The power saving method includes S1001 and S1002.

S1001: The network device sends first indication information to the terminal device, and correspondingly, the terminal device receives the first indication information from the network device.

S1002: The terminal device skips performing PDCCH monitoring in a first duration based on the first indication information, where the first duration is related to a periodicity or frame rate of data. Optionally, the PDCCH includes information for scheduling the data.

In S1001, the first indication information sent by the network device to the terminal device indicates the terminal device to skip performing PDCCH monitoring.

It should be noted that, in this embodiment of this application, skipping PDCCH monitoring may also be referred to as skipping monitoring a PDCCH, not monitoring the PDCCH, suspending PDCCH monitoring, avoiding PDCCH monitoring, or stopping PDCCH monitoring.

It should be noted that, in this embodiment of this application, PDCCH monitoring may involve intermediate radio frequency processing and baseband processing, and skipping at least one of the intermediate radio frequency processing or the baseband processing may be understood as skipping performing PDCCH monitoring. For example, skipping the intermediate radio frequency processing may include disabling radio frequency hardware for receiving a signal. Skipping the baseband processing may include skipping at least one of the following:

obtaining a PDCCH resource location; and
performing cyclic redundancy check (cyclic redundancy check, CRC) based on a radio network temporary identifier (radio network temporary identifier, RNTI).

When the CRC succeeds, corresponding information on the PDCCH is decoded. When the CRC fails, the PDCCH monitoring continues to be performed at a next PDCCH resource location.

In this embodiment of this application, the network device may determine, based on a transmission status of transmitting data to the terminal device, whether to send the first indication information to the terminal device.

In a possible implementation, when determining that transmission of data to the terminal device has been completed, or when determining that transmission of data to the terminal device is not completed in specified time, or when determining that transmission of data to the terminal device has been completed for a period of time, the network device sends the first indication information to the terminal device, to indicate the terminal device to skip performing PDCCH monitoring. A specific implementation in which the network device determines the transmission status of the data is related to a service type corresponding to the data. For example, if the network device transmits a data frame of an XR service to the terminal device, the network device may send the first indication information to the terminal device when determining that transmission of all data of a currently transmitted data frame has been completed, or when determining that transmission of a currently transmitted data frame cannot be completed in given time, for example, in a packet delay budget (packet delay budget, PDB), or when determining that transmission of all data of a currently transmitted data frame has been completed for a period of time.

Optionally, in this embodiment of this application, when the terminal device supports a service, and the network device transmits data of the service to the terminal device, the network device may determine, based on a transmission status of the data of the service, whether to send the first indication information. When the terminal device supports a plurality of services, and the network device transmits, to the terminal device, data respectively corresponding to the plurality of services, the network device may determine, based on a transmission status of data of one of the services, whether there is a need to send the first indication information. For brief description below, a service corresponding to data that is used by the network device to determine whether to send the first indication information may be referred to as a first service.

For example, the terminal device supports the XR service and an enhanced mobile broadband (enhanced mobile broadband, eMBB) service, and the network device may determine, based on a transmission status of the data frame of the XR service, whether there is a need to send the first indication information to the terminal device. In this scenario, the XR service may be referred to as the first service.

Optionally, in this embodiment of this application, the first indication information may be carried in DCI.

In S1002, after receiving the first indication information, the terminal device determines, based on an indication of the first indication information, the first duration related to the periodicity or frame rate of the data, and skips performing PDCCH monitoring in the first duration. After the end of the first duration, the terminal device may continue to perform PDCCH monitoring. When the data is transmitted in frames, the frame rate of the data is a number of frames transmitted per unit time, the periodicity of the data is an interval between two adjacent frames arriving at the network device, and a value of the periodicity of the data is a reciprocal of a value of the frame rate of the data.

In this embodiment of this application, the terminal device may skip performing PDCCH monitoring after successfully decoding the first indication information. Alternatively, the terminal device may start to skip performing PDCCH monitoring after successfully decoding the first indication information for a period of time. Duration between time at which the terminal device successfully decodes the first indication information and start time at which the terminal skips performing PDCCH monitoring may depend on a capability of the terminal device.

According to the power saving method provided in this embodiment of this application, the terminal device may skip performing, based on the indication of the first indication information, PDCCH monitoring in the first duration related to the periodicity or frame rate of the data. Different from an existing solution in which a duration for skipping performing PDCCH monitoring is not related to the periodicity or frame rate of the data, in the power saving method provided in this embodiment of this application, the duration in which the terminal device skips performing PDCCH monitoring may be controlled to be related to the periodicity or frame rate of the data. Therefore, in a periodic data transmission scenario, time in which the terminal device performs PDCCH monitoring matches transmission time of the data.

Optionally, for the problem described above that because the periodicity of the XR service is a non-integer value, the method for PDCCH monitoring in the periodicity of an integer value cannot meet PDCCH monitoring time required by the terminal device to receive the data frame of the XR service, the technical solution in this embodiment of this application may be applied to a scenario in which the terminal device receives the data frame of the XR service. Correspondingly, the periodicity of the data related to the first duration may be a periodicity of the XR service. For example, the periodicity of the data may be z ms, where z is a non-integer. For example, the periodicity of the data may be 33.33 ms, 16.67 ms, or 8.33 ms. The frame rate of the data related to the first duration may be a frame rate of the XR service. For example, the frame rate of the data may be 30 FPS, 60 FPS, or 120 FPS. Certainly, the technical solution in this embodiment of this application may still be applied when the periodicity of the data is an integer value.

A method for determining of the first duration in this embodiment of this application is described in detail below.

In this embodiment of this application, to enable the time in which the terminal device performs PDCCH monitoring to match the transmission time of the data, the first duration needs to be related to the periodicity or frame rate of the data. For example, the periodicity of the data may be a frame periodicity of the XR service, and the frame rate of the data may be a frame rate of the XR service.

In this embodiment of this application, the first duration is related to the periodicity or frame rate of the data. In this case, to determine the first duration, the terminal device needs to obtain the periodicity or frame rate of the data, or needs to obtain a parameter related to the periodicity or frame rate of the data. The following describes several example manners.

In a possible implementation, the periodicity or frame rate of the data, or the parameter related to the periodicity or frame rate of the data may be configured by the network device for the terminal device. For example, the network device includes, in signaling sent by the network device to the terminal device, the periodicity or frame rate of the data, or the parameter related to the periodicity or frame rate of the data. For example, RRC signaling may carry the parameter related to the frame rate of the data, to configure a frame rate of the data such as 30 FPS, 60 FPS, 90 FPS, or 120 FPS, or may carry the parameter related to the periodicity of the data such as 1/30 seconds, 1/60 seconds, 1/90 seconds, or 1/120 seconds. Alternatively, the terminal device may obtain the periodicity or frame rate of the data from an application layer of the terminal device. Alternatively, the terminal device may perform sensing based on a service packet arrival feature (a feature of arrival of a service data packet), to obtain the periodicity or frame rate of the data. Certainly, the terminal device may alternatively obtain the periodicity or frame rate of the data, or the parameter related to the periodicity or frame rate of the data in another manner. A specific implementation in which the terminal device obtains the periodicity or frame rate of the data, or the parameter related to the periodicity or frame rate of the data is not limited in this embodiment of this application.

Optionally, in this embodiment of this application, to have unified understanding of the first duration on the terminal device side and the network device side, the network device may also determine the first duration. To determine the first duration, the network device also needs to obtain the periodicity or frame rate of the data, or needs to obtain the parameter related to the periodicity or frame rate of the data. In a possible manner, the network device may receive, from the terminal device, information indicating the periodicity or frame rate of the data. For example, the terminal device may send, to the network device via user assistance information (user assistance information, UAI), the periodicity or frame rate of the data, or the parameter related to the periodicity or frame rate of the data. Alternatively, the network device may perform sensing based on a service packet arrival feature, to obtain the periodicity or frame rate of the data. Alternatively, a core network device may notify the network device of the periodicity or frame rate of the data, or the parameter related to the periodicity or frame rate of the data. Certainly, the network device may alternatively obtain a value of the periodicity or frame rate of the data in another manner. A specific implementation in which the network device obtains the value of the periodicity or frame rate of the data is not limited in this embodiment of this application.

The foregoing describes how the terminal device obtains the periodicity or frame rate of the data. After receiving the first indication information, the terminal device may determine the first duration based on the periodicity or frame rate of the data and a predefined algorithm, model, or calculation rule. The first duration determined based on the predefined algorithm, model, or calculation rule may be used to control time at which the terminal device starts to perform PDCCH monitoring after skipping performing PDCCH monitoring, to match the transmission time of the data (or time at which the network device sends the data).

It should be noted that, in this embodiment of this application, that two items match may be understood as that the two items are equal or a difference between the two items is within a specific threshold. The specific threshold may be predefined, or may be set based on actual requirements. For example, if the transmitted data is the data frame of the XR service, the specific threshold may be a largest absolute value of a jitter of the XR service. In other words, that the time at which the terminal device starts to perform PDCCH monitoring matches the transmission time of the data may be understood as that the data transmitted by the network device may be received by the terminal device when the terminal device starts to perform PDCCH monitoring, or may be received in a duration after the terminal device starts to perform PDCCH monitoring. Therefore, power consumption of the terminal device is not wasted.

Optionally, if the network device also needs to determine the first duration, the network device may determine, based on the same algorithm, model, or calculation rule, and the periodicity or frame rate of the data, a duration that is the same as the first duration determined by the terminal device.

Optionally, in this embodiment of this application, the first duration may further be related to at least one of the following:

time at which the first indication information is received; or first reference time configured by the network device.

Optionally, in this embodiment of this application, the time at which the first indication information is received may be time at which the network device sends the first indication information via an air interface resource. Alternatively, the time at which the first indication information is received may be time that is elapsed by an offset value from time at which the network device sends the first indication information via an air interface resource. The offset value is configured by the network device or is predefined. For example, the network device may configure, by using a value of k0 configured by using an PDSCH-TimeDomainResourceAllocation information element in the RRC signaling, an offset duration between time at which the first indication information is sent and time at which the first indication information starts to take effect. Alternatively, the time at which the first indication information is received may be a time domain position of an air interface resource of the first indication information. Alternatively, the time at which the first indication information is received may be time that is elapsed by an offset value from a time domain position of an air interface resource of the first indication information. The offset value is configured by the network device or is predefined. Alternatively, the time at which the first indication information is received may be time at which the first indication information starts to take effect.

The first reference time is reference time for determining the first duration in this embodiment of this application.

Optionally, the first reference time may be used to represent start time of the first service, or may be understood as time at which transmission of data of the first service starts. For example, if the first service is the XR service, the first reference time may be time at which a 1st data frame of the XR service arrives at the network device.

Alternatively, the first reference time may be time obtained by adding an offset to estimated time at which transmission of data of the first service starts (which may also be understood as time at which a data frame of the first service arrives at the network device in an ideal case). Optionally, if the first service is the XR service, a value of the offset may be related to a jitter. For example, if the first service is the XR service, and a jitter range of the first service meets -4 ms≤jitter≤4 ms, the first reference time may be time of 4 ms, 3 ms, 2 ms, or 1 ms before estimated time at which transmission of a 1st data frame of the first service starts, or the first reference time may be time of 4 ms, 3 ms, 2 ms, or 1 ms after estimated time at which transmission of a 1st data frame of the first service starts.

Alternatively, the first reference time may be time at which one transmission of data of the first service starts, where the transmission is after first transmission. For example, if the first service is the XR service, the first reference time may be time at which a data frame in data frames after a 1st data frame of the first service arrives at the network device.

Alternatively, the first reference time may be time obtained by adding an offset to estimated time at which one transmission of data of the first service starts, where the transmission is after first transmission. Optionally, if the first service is the XR service, a value of the offset may be related to a jitter. For example, if the first service is the XR service, the first reference time may be time obtained by adding a possible value of a jitter to estimated time at which transmission of a data frame in data frames after a 1st data frame of the first service starts.

It should be noted that the first reference time in each of the foregoing four possible cases is an example of the first reference time provided in this embodiment of this application, and a specific implementation of setting the first reference time is not limited in this embodiment of this application.

In this embodiment of this application, the first reference time is configured by the network device. The network device may send, to the terminal device, information carrying a parameter related to the first reference time. Optionally, the network device may send, to the terminal device, the information carrying the first reference time. Alternatively, when the first reference time is time obtained by adding an offset to estimated time at which transmission of data of the first service starts, the network device may send, to the terminal device, information carrying a parameter related to the estimated time at which the transmission of the data of the first service starts and a parameter related to a value of the offset, and the terminal device determines the first reference time based on the estimated time at which the transmission of the data of the first service starts and the value of the offset. For example, the network device may configure the first reference time for the terminal device via the RRC signaling.

After receiving the first indication information, the terminal device may determine, by using the predefined algorithm, model, or calculation rule, the first duration based on the periodicity or frame rate of the data, and at least one of the time at which the first indication information is received, and the first reference time.

The method for determining a first duration provided in this embodiment of this application is described in detail below.

Example 1: In this example, the first duration may meet the following relationship:

$$X = a + \text{ceil}[(b-a)/\Delta t] * \Delta t - b \qquad\qquad \text{Formula } (1)$$

X represents the first duration, a represents the first reference time, ceil represents rounding up, b represents the time at which the first indication information is received, and Δt represents the periodicity of the data.

It should be noted that, in the parameters included in Formula (1), time units of a, b, and Δt are the same.

Alternatively, in this example, the first duration may meet the following relationship:

$$X = a + \frac{\text{ceil}[(b-a)*m]}{m} - b \qquad \text{Formula (2)}$$

X represents the first duration, a represents the first reference time, ceil represents rounding up, b represents the time at which the first indication information is received, and m represents the frame rate of the data, that is, a number of frames transmitted per unit time.

It should be noted that, in the parameters included in Formula (2), time units of a, b, and m are the same. Formula (1) or Formula (2) may be understood as a relational expression that the first duration meets in a mathematical sense.

Example 2: In this example, the first duration may meet the following relationship:

$$X = c + \text{Int}\left\{\text{ceil}\left[\frac{(d-c)*s}{y}\right] * \frac{y}{s}\right\} - d \qquad \text{Formula (3)}$$

X represents the first duration, c represents a slot index of the first reference time, Int represents rounding up or rounding down, ceil represents rounding up, d represents a slot index of the time at which the first indication information is received, y represents the periodicity of the data, and s represents a slot length.

It should be noted that, in the parameters included in Formula (3), time units of y and s are the same. For example, y may be 5 ms, and s may be 0.577 ms. Formula (3) may be understood as Formula (1) represented by using a slot as a granularity, and a time unit of the first duration determined according to Formula (3) is a slot.

Alternatively, in this example, the first duration may meet the following relationship:

$$X = c + \text{Int}\left\{\frac{\text{ceil}[(d-c)*s*j]}{s*j}\right\} - d \qquad \text{Formula (4)}$$

X represents the first duration, c represents a slot index of the first reference time, Int represents rounding up or rounding down, ceil represents rounding up, d represents a slot index of the time at which the first indication information is received, j represents the frame rate of the data, that is, a number of frames transmitted per unit time, and s represents a slot length.

It should be noted that, in the parameters included in Formula (4), time units of j and s are the same. Formula (4) may be understood as Formula (2) represented by using a slot as a granularity, and a time unit of the first duration determined according to Formula (4) is a slot.

Example 3: In this example, the first duration meets the following relationship:

$$X = e + \text{Int}\left\{\text{ceil}\left[\frac{(f-e)*q}{p}\right] * \frac{p}{q}\right\} - f \qquad \text{Formula (5)}$$

X represents the first duration, e represents a subframe index of the first reference time, Int represents rounding up or rounding down, ceil represents rounding up, f represents a subframe index of the time at which the first indication information is received, p represents the periodicity of the data, and q represents a subframe length.

It should be noted that, in the parameters included in Formula (5), time units of p and q are the same. For example, p may be 5 ms, and s may be 1 ms. Formula (5) may be understood as Formula (1) represented by using a subframe as a granularity, and a time unit of the first duration determined according to Formula (5) is a subframe. When a duration of one subframe is 1 ms, Formula (5) is also understood as Formula (1) represented with a millisecond granularity, and a time unit of the first duration determined according to Formula (5) is millisecond.

Alternatively, in this example, the first duration may meet the following relationship:

$$X = c + \text{Int}\left\{\frac{\text{ceil}[(f-e)*q*h]}{q*h}\right\} - f \qquad \text{Formula (6)}$$

X represents the first duration, e represents a subframe index of the first reference time, Int represents rounding up or rounding down, ceil represents rounding up, f represents a subframe index of the time at which the first indication information is received, h represents the frame rate of the data, that is, a number of frames transmitted per unit time, and q represents a subframe length.

It should be noted that, in the parameters included in Formula (6), time units of h and q are the same. Formula (6) may be understood as Formula (2) represented by using a subframe as a granularity, and a time unit of the first duration determined according to Formula (6) is a subframe. When a duration of one subframe is 1 ms, Formula (6) is also understood as Formula (2) represented with a millisecond granularity, and a time unit of the first duration determined according to Formula (6) is millisecond.

Example 4: In this example, if $timeReferenceSFN \leq SFN_{skipping\ indication}$, the first duration meets the following relationship:

Duration=(M×1024+$timeReferenceSFN$)×$numberOfSlotsPerFrame$+$timeDomainOffset$+floor [$N$×100/$ArriveRate$×$numberOfSlotsPerFrame$]-((M×1024+SFN$_{skipping\ indication}$)×$numberOfSlotsPerFrame$+slot$_{skipping\ indication}$)     Formula (7)

Alternatively, if $timeReferenceSFN > SFN_{skipping\ indication}$, the first duration meets the following relationship:

Duration=((M+1)×1024+$timeReferenceSFN$)×$numberOfSlotsPerFrame$+$timeDomainOffset$+floor [$N$×100/$ArriveRate$×$numberOfSlotsPerFrame$]-((M×1024+SFN$_{skipping\ indication}$)×$numberOfSlotsPerFrame$+slot$_{skipping\ indication}$)     Formula (8)

In Formula (7) or Formula (8), Duration represents the first duration; floor represents rounding down; *timeReferenceSFN* represents a system frame number of the first reference time; *timeDomainOffset* represents a slot offset value of the first reference time relative to *timeReferenceSFN,* where for example, assuming that a slot in which the first reference time is located is a 2nd slot in a system frame in which the first reference time is located, *timeDomainOffset*=2; SFN$_{skipping\ indication}$ represents a system frame number of the time at which the first indication information is received; slot$_{skipping\ indication}$ represents a slot offset value of the time at which the first indication information is received relative to SFN$_{skipping\ indication}$, where for example, assuming that a slot in which the time at which the first indication information is received is located is a 3rd slot in a system frame in which the time at which the first indication information is received is located, *timeDomainOffset*=3; *numberOfSlotsPerFrame* represents a number of slots in a system frame; *ArriveRate* represents the frame rate of the data, that is, a number of data frames transmitted per second; N is an incremental integer, and represents an Nth periodicity of the data when the first indication information is received, where for example, assuming that a data frame of the service is a data frame in a 4th periodicity when the first indication information is received, N=4; and M is an incremental integer and represents a number of wraparound (wraparound) times of the system frame number, and M meets the following relationship:

$$M=\text{floor } (N \times 100/ArriveRate)\ \text{modulo } (1024) \qquad\qquad \text{Formula } (9)$$

In Formula (9), floor represents rounding down, and modulo represents a modulo operation. Meanings of N and *ArriveRate* in Formula (9) are the same as meanings of N and *ArriveRate* in Formula (7) or Formula (8).

It should be noted that in Formula (7) or Formula (8), 100/$ArriveRate$×$numberOfSlotsPerFrame$ may alternatively be equivalently replaced with 1/$ArriveRate$×$numberOfSlotsPerSecond,$ where *numberOfSlotsPerSecond* represents a number of slots per second.

Example 5: In this example, the first duration may be an interval between an end moment of a slot in which the time at which the first indication information is received is located and a start moment of a slot that meets the following relationship and that is closest to the time at which the first indication information is received:

[($SFN$×$numberOfSlotsPerFrame$)+slot number in the frame]=($timeReferenceSFN$×$numberOfSlotsPerFrame$+$timeDomainOffset$+M) modulo (1024×$numberOfSlotsPerFrame$)     Formula (10)

In Formula (10), SFN represents a system frame number of a slot; slot number in the frame represents an index of a slot in a system frame in which the slot is located, where for example, assuming that the slot is a 2nd slot in the system frame in which the slot is located, slot number in the frame=2; modulo represents a modulo operation; meanings of *numberOfSlotsPerFrame, timeReferenceSFN,* and *timeDomainOffset* in Formula (10) are the same as meanings of *numberOfSlotsPerFrame, timeReferenceSFN,* and *timeDomainOffset* in Formula (7) or Formula (8); and M is an incremental integer, and M meets the following relationship:

$$\text{Int}[M \times ArriveRate/1000]+1=\text{Int}[(M+1) \times ArriveRate/1000] \qquad \text{Formula (11)}$$

In Formula (11), Int represents rounding up or rounding down; and *ArriveRate* represents the frame rate of the data, that is, a number of data frames transmitted per second.

For ease of understanding, how to determine the first duration in Example 2 is described below with reference to the accompanying drawings. As shown in FIG. 11, for example, data is the data frame of the XR service, and c represents the slot index of the first reference time. It may be learned that a jitter of the data frame may be considered in configuration of the first reference time, and there is an offset between the first reference time and ideal arrival time of the 1st data frame. y represents a periodicity of the data frame (data periodicity), and s represents a slot length. d1 represents a slot index of time at which the terminal device receives the first indication information for the first time. $\text{Int}(\frac{y}{s})$ is for determining a number of slots included in one data periodicity. A 2nd data frame and the 1st data frame are spaced by one data periodicity. In this case, the terminal device may infer, based on c and $\text{Int}(\frac{y}{s})$, that a slot index of possible arrival time of the 2nd data frame is $c+\text{Int}(\frac{y}{s})$. After receiving the first indication information, the terminal device starts to skip performing PDCCH monitoring. In this case, the terminal device may determine, based on the slot index d1 of the time at which the terminal device receives the first indication information for the first time, and the slot index $c+\text{Int}(\frac{y}{s})$ of the possible arrival time of the 2nd data frame, that the first duration in which the terminal device needs to skip performing PDCCH monitoring after receiving the first indication information for the first time is X1. d2 represents a slot index of time at which the terminal device receives the first indication information for the second time. A 3rd data frame and the 1st data frame are spaced by two data periodicities. Similarly, $\text{Int}(\frac{2y}{s})$ is for determining a number of slots included in the two data periodicities. In this case, the terminal device may infer, based on c and $\text{Int}(\frac{2y}{s})$, that a slot index of possible arrival time of the 3rd data frame is $c+\text{Int}(\frac{2y}{s})$. Further, the terminal device may determine, based on the slot index d2 of the time at which the terminal device receives the first indication information for the second time, and the slot index $c+\text{Int}(\frac{2y}{s})$ of the possible arrival time of the 3rd data frame, that the first duration in which the terminal device needs to skip performing PDCCH monitoring after receiving the first indication information for the second time is X2.

It should be noted that Formula (1) to Formula (8) and Formula (10) are nine example calculation rules for determining the first duration provided in this embodiment of this application. A form of an algorithm, model, or calculation rule for determining the first duration is not limited in this embodiment of this application. It may be understood that a time granularity of the parameters in Formula (1) to Formula (8) and Formula (10) are adaptively replaced with another time granularity, for example, a symbol, a sub-slot, or the like, and the formulas may still be used to determine a first duration at the another time granularity.

It can be learned from the descriptions of Example 1, Example 2, Example 3, and Example 4 that when the first duration is related to the periodicity or frame rate of the data, the time at which the first indication information is received, and the first reference time, because a relative time location relationship changes, the first duration may be understood as a variable duration.

Optionally, in consideration of a scenario with a plurality of services mixed, in this embodiment of this application, the network device may further send second indication information to the terminal device, where the second indication information indicates the terminal device to skip performing PDCCH monitoring in a second duration. The second duration is a fixed value configured by the network device. Therefore, the second duration may be understood as a fixed duration. The network device may send the first indication information or the second indication information to the terminal device based on data transmission statuses of the plurality of services.

Optionally, the power saving method provided in this embodiment of this application may further include S 1003.

S 1003: The network device sends first configuration information to the terminal device, and correspondingly, the terminal device receives the first configuration information from the network device. The first indication information indicates to skip performing PDCCH monitoring in the first duration based on the first configuration information.

When the power saving method provided in this embodiment of this application includes S1003, S1002 may be as follows: After the network device sends the first indication information to the terminal device, the terminal device may determine a first duration based on the first configuration information under an indication of the first indication information, and skip performing PDCCH monitoring in the first duration. After the end of the first duration, the terminal device may continue to perform PDCCH monitoring.

Optionally, in this embodiment of this application, the first configuration information may be a parameter indicating a candidate duration for PDCCH skipping, and the parameter represents that PDCCH monitoring needs to be skipped in the first duration related to the periodicity or frame rate of the data. The network device may configure only the first configuration information to indicate the configured candidate duration for PDCCH skipping. Alternatively, in consideration of the scenario with a plurality of services mixed, in addition to configuring the first configuration information for the first service, the network device may further configure one or more fixed values as a candidate duration for PDCCH skipping, to indicate, based on data transmission statuses of different services, the terminal device to skip performing PDCCH monitoring in the first duration or configured duration of a fixed value.

For example, the first configuration information may be carried in RRC signaling. For example, the first configuration information may be configured by using a PDCCHSkipDurationList-R17 field in the RRC signaling. For another example, the first configuration information may alternatively be configured by using a newly defined field in the RRC signaling.

A plurality of possible implementations of the first configuration information in this embodiment of this application are described in detail below with reference to examples.

In a possible implementation, that the first configuration information corresponds to the periodicity or frame rate of the data may also be described as that the first configuration information corresponds to a periodicity or frame rate of the first service. In this implementation, when determining the first duration, the terminal device may learn of the periodicity or frame rate of the data based on the first configuration information.

Optionally, in this implementation, the first configuration information may further correspond to a subcarrier spacing (subcarrier spacing, SCS).

For example, when the first configuration information is a parameter in the PDCCHSkipDurationList-R17 field, if the data is the data frame of the XR service, and a frame rate of the data frame is 30 FPS, 60 FPS, 120 FPS, or 180 FPS, the first configuration information may be tailored for periodic traffic of 30 FPS, tailored for periodic traffic of 60 FPS, tailored for periodic traffic of 120 FPS, or tailored for periodic traffic of 180 FPS of a corresponding frame rate.

It is assumed that the first configuration information corresponds to the SCS, the data is the data frame of the XR service, the frame rate of the data frame is 30 FPS, and the SCS may be 15 kHz, 30 kHz, 60 kHz, or 120 kHz, three parameters that are carried in the PDCCHSkipDurationList-R17 and that indicate the candidate duration for PDCCH skipping are respectively 1, 100, and the first configuration information. In this case, the PDCCHSkipDurationList-R17 field may be as follows:

{1, 100, tailored for periodic traffic of 30 FPS} slots for 15 kHz SCS, where the PDCCHSkipDurationList-R17 field corresponds to the SCS of 15 kHz; or

{1, 100, tailored for periodic traffic of 30 FPS} slots for 30 kHz SCS, where the PDCCHSkipDurationList-R17 field corresponds to the SCS of 30 kHz; or

{1, 100, tailored for periodic traffic of 30 FPS} slots for 60 kHz SCS, where the PDCCHSkipDurationList-R17 field corresponds to the SCS of 60 kHz; or

{1, 100, tailored for periodic traffic of 30 FPS} slots for 120 kHz SCS, where the PDCCHSkipDurationList-R17 field corresponds to the SCS of 120 kHz.

It may be understood that, if the first configuration information corresponds to the periodicity of the data, for the first configuration information corresponding to the frame rate, for example, 30 FPS, in the foregoing example, the frame rate may also be replaced with a corresponding periodicity. For example, the first configuration information may be tailored for periodic traffic of 1/30s.

In another possible implementation, data of different periodicities or frame rates corresponds to same first configuration information.

Optionally, in this implementation, the first configuration information may further correspond to an SCS.

For example, when the first configuration information is a parameter in the PDCCHSkipDurationList-R17 field, if the data is the data frame of the XR service, the first configuration information may be tailored for periodic traffic.

It is assumed that the first configuration information corresponds to the SCS, the data is the data frame of the XR service, and the SCS may be 15 kHz, 30 kHz, 60 kHz SCS, or 120 kHz, three parameters that are carried in the PDCCHSkipDurationList-R17 and that indicate the candidate duration for PDCCH skipping are respectively 1, 100, and the first configuration information. In this case, the PDCCHSkipDurationList-R17 field may be as follows:

{1, 100, tailored for periodic traffic} slots for 15 kHz SCS, where the PDCCHSkipDurationList-R17 field corresponds to the SCS of 15 kHz; or

{1, 100, tailored for periodic traffic} slots for 30 kHz SCS, where the PDCCHSkipDurationList-R17 field corresponds to the SCS of 30 kHz; or

{1, 100, tailored for periodic traffic} slots for 60 kHz SCS, where the PDCCHSkipDurationList-R17 field corresponds to the SCS of 60 kHz; or

{1, 100, tailored for periodic traffic} slots for 120 kHz SCS, where the PDCCHSkipDurationList-R17 field corresponds to the SCS of 120 kHz.

For another example, when the first configuration information is a parameter of a newly defined field in the RRC signaling, if the newly defined field can take effect for different SCSs, the newly defined field may be PDCCHSkipDuration for periodic traffic-ENABLE: True/False. When the field is set to True, the field may indicate the first configuration information. This field can take effect for a plurality of SCSs. Alternatively, if the newly defined field corresponds to an SCS, and the SCS may be 15 kHz, 30 kHz, 60 kHz SCS, or 120 kHz, the newly defined field may be as follows:

{PDCCHSkipDuration for periodic traffic-ENABLE: True/False} for 15 kHz SCS, where the field corresponds to the SCS of 15 kHz; or

{PDCCHSkipDuration for periodic traffic-ENABLE: True/False} for 30 kHz SCS, where the field corresponds to the SCS of 30 kHz; or

{PDCCHSkipDuration for periodic traffic-ENABLE: True/False} for 15 kHz SCS, where the field corresponds to the SCS of 60 kHz; or

{PDCCHSkipDuration for periodic traffic-ENABLE: True/False} for 120 kHz SCS, where the field corresponds to the SCS of 120 kHz.

It should be noted that, in this specification, names of fields or names of parameters in the fields, for example, tailored for periodic traffic of 30 FPS, PDCCHSkipDuration for periodic traffic-ENABLE: True/False, and a name mentioned below, are examples of possible names provided in this embodiment of this application, and specific names thereof are not limited in embodiments of this application.

The foregoing describes the specific implementations of the first configuration information. How the terminal device skips performing PDCCH monitoring in the first duration based on the first configuration information under the indication of the first indication information in this embodiment of this application is described in detail below.

Optionally, the terminal device may determine, based on the first indication information and a predefined mapping relationship, that information corresponding to the first indication information is the first configuration information, to determine, based on the first configuration information, that the terminal device needs to determine the first duration, and skip performing PDCCH monitoring in the first duration.

In a possible implementation, the first indication information may be a PDCCH monitoring adaptation indication field. The terminal device may determine, based on a bit value of the PDCCH monitoring adaptation indication field and the predefined mapping relationship, information corresponding to the bit value of the PDCCH monitoring adaptation indication field. If the information corresponding to the bit value of the PDCCH monitoring adaptation indication field is the first configuration information, the terminal device determines the first duration based on the periodicity or frame rate of the data, and skips performing PDCCH monitoring in the first duration.

The following provides explanations with reference to specific examples. It is assumed that the first indication information is the PDCCH monitoring adaptation indication field, and the PDCCHSkipDurationList-R17 field is {1, 100, tailored for periodic traffic of 30 FPS} slots for 15 kHz SCS, where tailored for periodic traffic of 30 FPS is the first configuration information, and the first configuration information is a 3<sup>rd</sup> parameter in three parameters that are configured in the PDCCHSkipDurationList-R17 field and that indicate the candidate duration for PDCCH skipping. The first indication information and indicated user equipment behaviors may be shown in Table 5 below:

**Table 5**

| PDCCH monitoring adaptation indication field | Indicated user equipment behaviors |
|---|---|
| One bit with a bit value of "0"; or two bits with a bit value of "00" | Perform PDCCH monitoring |
| One bit with a bit value of "1"; or two bits with a bit value of "01" | Skip performing PDCCH monitoring in a duration corresponding to a 1<sup>st</sup> parameter in a PDCCHSkipDurationList-R17 field |
| Two bits with a bit value of "10" | Skip performing PDCCH monitoring in a duration corresponding to a 2<sup>nd</sup> parameter in a PDCCHSkipDurationList-R17 field |

(continued)

| PDCCH monitoring adaptation indication field | Indicated user equipment behaviors |
|---|---|
| Two bits with a bit value of "11" | Skip performing PDCCH monitoring in a duration corresponding to a 3rd parameter in a PDCCHSkipDurationList-R17 field |

As shown in Table 5, when the bit value of the PDCCH monitoring adaptation indication field is "11", the terminal device may determine, based on the correspondence shown in Table 5, to skip performing PDCCH monitoring in a duration corresponding to tailored for periodic traffic of 30 FPS, namely, the first duration. After determining that the terminal device needs to skip performing PDCCH monitoring in the first duration, the terminal device determines the first duration based on a frame rate of 30 FPS of the data. Similarly, when the bit value of the PDCCH monitoring adaptation indication field is "0" or "00", the terminal device may determine, based on the correspondence shown in Table 5, that the terminal device does not need to skip performing PDCCH monitoring, and may continue to perform PDCCH monitoring. When the bit value of the PDCCH monitoring adaptation indication field is "1" or "01", the terminal device may determine, based on the correspondence shown in Table 5, that a duration in which PDCCH monitoring needs to be skipped is one slot. When the bit value of the PDCCH monitoring adaptation indication field is "10", the terminal device may determine, based on the correspondence shown in Table 5, that a duration in which PDCCH monitoring needs to be skipped is ten slots.

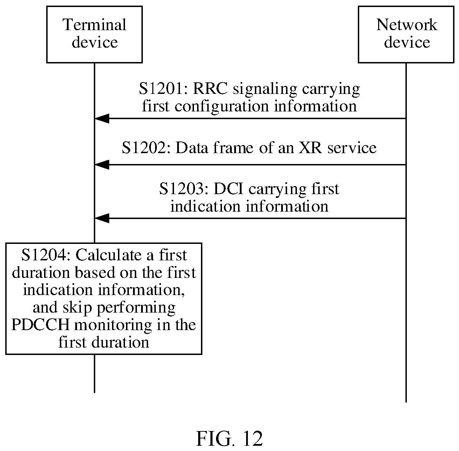

The following describes an example of a specific embodiment of the power saving method provided in this application. It is assumed that the data is a data frame of an XR service. In FIG. 12, the method is described by using an example in which a network device and a terminal device are entities for performing interaction. However, the entities for performing interaction are not limited in this application. For example, the network device in FIG. 12 may alternatively be a chip, a chip system, or a processor that supports the network device in implementing the method, or may be a logical module or software that can implement all or some functions of the network device. The terminal device in FIG. 12 may alternatively be a chip, a chip system, or a processor that supports the terminal device in implementing the method, or may be a logical module or software that can implement all or some functions of the terminal device. This embodiment includes S1201 to S1204.

S1201: The network device includes, in RRC signaling sent by the network device to the terminal device, first configuration information for configuring a candidate duration for PDCCH skipping, where the first configuration information indicates to skip a dynamic duration (first duration) that matches a periodicity of an XR service.

For specific implementation of S1201, refer to the descriptions of S1003. Details are not described herein again.

S1202: The network device transmits a data frame of the XR service to the terminal device.

S1203: The network device sends DCI to the terminal device, where the DCI carries first indication information, and the first indication information indicates the terminal device to skip performing PDCCH monitoring based on the first configuration information.

For specific implementation of S1203, refer to the descriptions of S1001 and S1003. Details are not described herein again.

S1204: The terminal device determines, based on the first indication information, that a duration in which PDCCH skipping needs to be performed this time is the candidate duration indicated by the first configuration information, namely, the first duration. The terminal device calculates the first duration based on a predefined calculation rule and the periodicity of the XR service, and skips performing PDCCH monitoring in the first duration.

For specific implementation of S1204, refer to the descriptions of S1001 and S1003. Details are not described herein again.

Optionally, when the first indication information indicates to skip performing PDCCH monitoring in the first duration based on the first configuration information, the first indication information may further indicate to perform SSSG switching. In other words, if the terminal device determines, under an indication of the first indication information, that the terminal device needs to determine the first duration based on the first configuration information, the terminal device further needs to perform SSSG switching under the indication of the first indication information. In this scenario, the network device configures a plurality of SSSGs for the terminal device.

In a possible implementation, the terminal device may determine, based on the first indication information and a predefined mapping relationship, that information corresponding to the first indication information is the first configuration information, to determine, based on the first configuration information, that the terminal device needs to determine the first duration, skip performing PDCCH monitoring in the first duration, and determine to perform SSSG switching based on the first configuration information.

In another possible implementation, the terminal device may determine, based on the first indication information and a predefined mapping relationship, that information corresponding to the first indication information is the first configuration information. If the terminal device determines that the information corresponding to the first indication information is the first configuration information, the terminal device may determine, based on another piece of configuration information different from the first configuration information, that the SSSG switching needs to be performed. The configuration information used by the terminal device to determine that the SSSG switching needs to be performed may be newly defined information, or may be existing information reused. This is not limited in this embodiment of this application.

That the first indication information indicates to skip performing PDCCH monitoring in the first duration based on the first configuration information and perform SSSG switching is explained by using a specific example.

It is assumed that the network device configures an SSSG 0 and an SSSG 1 for the terminal device, the first indication information is a PDCCH monitoring adaptation indication field, and a PDCCHSkipDurationList-R17 field is {1, 100, tailored for periodic traffic of 30 FPS} slots for 15 kHz SCS, where tailored for periodic traffic of 30 FPS is the first configuration information, and the first configuration information is a $3^{rd}$ parameter in three parameters that are configured in the PDCCHSkipDurationList-R17 field and that indicate the candidate duration for PDCCH skipping. The first indication information and indicated user equipment behaviors may be shown in Table 6 below:

**Table 6**

| PDCCH monitoring adaptation indication field | Indicated user equipment behaviors |
|---|---|
| One bit with a bit value of "0"; or two bits with a bit value of "00" | Perform PDCCH monitoring |
| One bit with a bit value of "1"; or two bits with a bit value of "01" | Skip performing PDCCH monitoring in a duration corresponding to a $1^{st}$ parameter in a PDCCHSkipDurationList-R17 field |
| Two bits with a bit value of "10" | Skip performing PDCCH monitoring in a duration corresponding to a $2^{nd}$ parameter in a PDCCHSkipDurationList-R17 field |
| Two bits with a bit value of "11" | Skip performing PDCCH monitoring in a duration corresponding to a $3^{rd}$ parameter in a PDCCHSkipDurationList-R17 field, and start to perform PDCCH monitoring in search space in an SSSG 0 and stop monitoring in search space in an SSSG 1 |

As shown in Table 6, it is assumed that the terminal device currently performs PDCCH monitoring in the search space in the SSSG 1. When the terminal device receives the DCI, and the bit value of the PDCCH monitoring adaptation indication field in the DCI is "11", the terminal device may determine, based on the correspondence shown in Table 6, that there is a need to skip performing PDCCH monitoring in a duration corresponding to tailored for periodic traffic of 30 FPS, namely, the first duration. In addition, the terminal device determines, based on the correspondence shown in Table 6, that the terminal device needs to switch to the SSSG 0, and performs PDCCH monitoring in the search space in the SSSG 0. Similarly, when the bit value of the PDCCH monitoring adaptation indication field is "0", "00", "1", "01", or "10", the terminal device does not need to perform SSSG switching, and may continue to perform PDCCH monitoring in current search space.

The following describes two manners in which the terminal device performs SSSG switching based on the indication of the first indication information.

Manner (a): After skipping performing PDCCH monitoring in the first duration, the terminal device switches to an SSSG indicated by the first indication information. It may be understood that this implementation may alternatively be implemented based on a search space switching timer. Specifically, after receiving the first indication information, the terminal device sets the search space switching timer to the first duration, and after the timer expires, the terminal device switches to the SSSG indicated by the first indication information.

Manner (b): After receiving the first indication information, the terminal device switches to an SSSG indicated by the first indication information, and skips performing PDCCH monitoring in the first duration.

Optionally, the SSSG to be switched that is indicated by the first indication information may be a sparse SSSG.

Further, the terminal device may switch from a dense SSSG to a sparse SSSG based on the indication of the first indication information. In other words, before receiving the first indication information, the terminal device may perform PDCCH monitoring in search space in the dense SSSG.

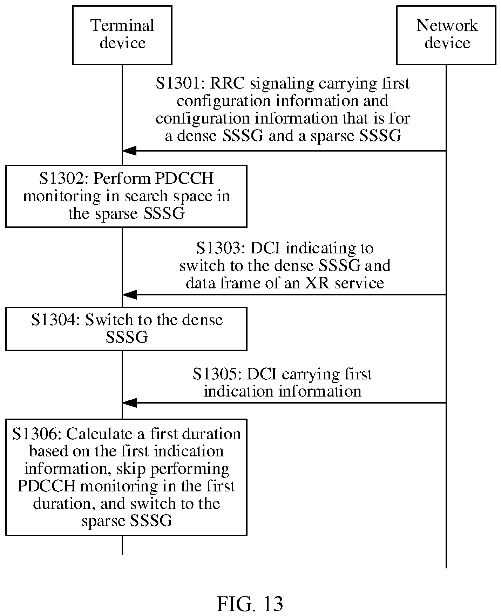

The following describes an example of a specific embodiment of the power saving method provided in this application. It is assumed that the data is a data frame of an XR service. In FIG. 13, the method is described by using an example in which a network device and a terminal device are entities for performing interaction. However, the entities for performing interaction are not limited in this application. For example, the network device in FIG. 13 may alternatively be a chip, a chip system, or a processor that supports the network device in implementing the method, or may be a logical module or software that can implement all or some functions of the network device. The terminal device in FIG. 13 may alternatively be a chip, a chip system, or a processor that supports the terminal device in implementing the method, or may be a logical module or software that can implement all or some functions of the terminal device. This embodiment includes S1301 to S1306.

S1301: The network device includes, in RRC signaling sent by the network device to the terminal device, first configuration information and configuration information that is for configuring a dense SSSG and a sparse SSSG, where the first configuration information indicates to skip a dynamic duration (first duration) that matches a periodicity of an XR service, and indicates to perform SSSG switching.

In S1301, the sparse SSSG is an SSSG 0, and the dense SSSG is an SSSG 1.

S1302: The terminal device performs PDCCH monitoring in search space in the sparse SSSG. That the terminal device first performs PDCCH monitoring in search space in the SSSG 0 may be default in a protocol, or may be configured by the network device.

S1303: The network device transmits the data frame of the XR service to the terminal device, where when scheduling a 1st transport block (transport block, TB) of the XR service, the network device delivers DCI to indicate the terminal device to switch to the dense SSSG, that is, indicate the terminal device to switch to the SSSG 1.

S1304: After receiving the DCI delivered by the network device in S1203, the terminal device switches to the SSSG 1, and performs PDCCH monitoring in search space in the SSSG 1.

S1305: The network device sends the DCI to the terminal device, where the DCI carries first indication information, and the first indication information indicates the terminal device to skip performing PDCCH monitoring and perform SSSG switching based on the first configuration information.

In S1305, the network device may determine, based on a transmission status of transmitting the data frame of the XR service to the terminal device, whether to send the first indication information to the terminal device. For details, refer to the descriptions of S1001. Details are not described herein again.

S1306: The terminal device determines, based on the first indication information, that a duration in which PDCCH skipping needs to be performed this time is a candidate duration indicated by the first configuration information, namely, the first duration, and the terminal device further determines that the terminal device needs to switch to the sparse SSSG.

In S1306, under the indication of the first indication information, the terminal device calculates the first duration based on a predefined calculation rule and the periodicity of the XR service, and skips performing PDCCH monitoring in the first duration. In addition, the terminal device performs SSSG switching to switch to the SSSG 0.

For specific implementation of S1306, refer to the descriptions of S1003. Details are not described herein again.

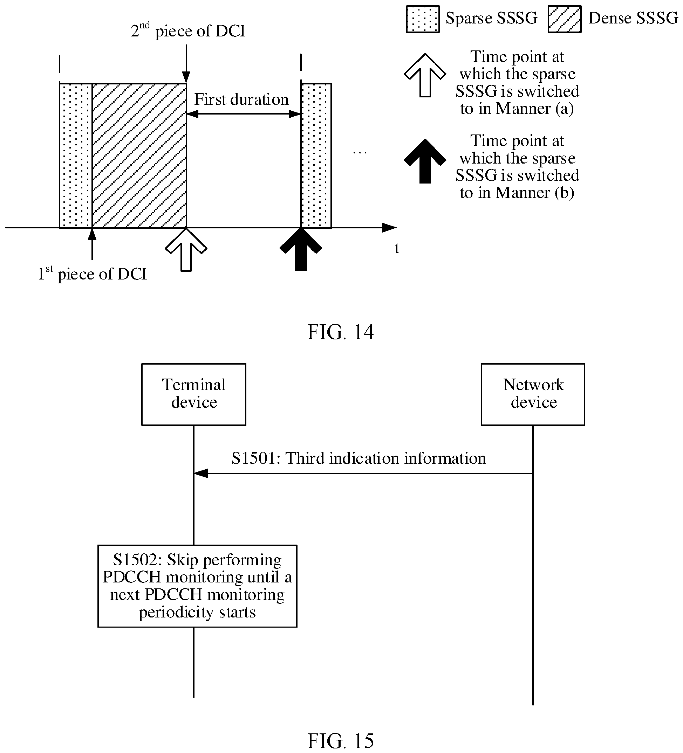

The foregoing describes S1301 to S1306 from the perspective of interaction between the terminal device and the network device. For ease of understanding, with reference to FIG. 14, the following describes how the terminal device performs SSSG switching based on the DCI delivered by the network device in S1301 to S1306.

As shown in FIG. 14, the terminal device first performs PDCCH monitoring in the search space in the sparse SSSG (SSSG 0). When scheduling a 1st TB of the data frame of the XR service, the network device sends a 1st piece of DCI to the terminal device, to indicate the terminal device to switch to the dense SSSG (SSSG 1). The terminal device switches to the SSSG 1 based on an indication of the DCI, and continues to perform PDCCH monitoring in the search space in the SSSG 1. The network device sends a 2nd piece of DCI to the terminal device based on the transmission status of the data frame of the XR service, where the DCI indicates the terminal device to skip performing PDCCH monitoring in the first duration and perform SSSG switching.

After receiving the 2nd piece of DCI, the terminal device calculates the first duration. The terminal device skips performing PDCCH monitoring in the first duration, and switches to the sparse SSSG 0. If the terminal device switches, in Manner (a) included in the manner of performing SSSG switching based on the indication of the first indication information, to the SSSG 0 at an end moment of skipping performing PDCCH monitoring, a time point at which the SSSG 0 is switched to is shown by a black arrow in FIG. 14. If the terminal device switches, in Manner (b) included in the manner of performing SSSG switching based on the indication of the first indication information, to the SSSG 0 after receiving the 2nd piece of DCI, and skips performing PDCCH monitoring in the first duration, a time point at which the SSSG 0 is switched to is shown by a white arrow in FIG. 14.

An embodiment of this application further provides another power saving method. FIG. 15 is a power saving method according to an embodiment of this application. In FIG. 15, the method is described by using an example in which a network device and a terminal device are entities for performing interaction. However, the entities for performing interaction are not limited in this application. For example, the network device in FIG. 15 may alternatively be a chip, a chip system, or a processor that supports the network device in implementing the method, or may be a logical module or software that can implement all or some functions of the network device. The terminal device in FIG. 15 may alternatively be a chip, a chip system, or a processor that supports the terminal device in implementing the method, or may be a logical module or software that can implement all or some functions of the terminal device. The power saving method includes S1501 and S1502.

S1501: The network device sends third indication information to the terminal device, and correspondingly, the terminal device receives the third indication information from the network device.

S1502: The terminal device skips performing PDCCH monitoring until a next PDCCH monitoring periodicity starts, where start time of the next PDCCH monitoring periodicity matches time at which the terminal device receives data.

It should be noted that, in this embodiment of this application, a PDCCH monitoring periodicity is set for the terminal device, and the terminal device may periodically perform PDCCH monitoring based on the PDCCH monitoring periodicity. In addition, the start time of the PDCCH monitoring periodicity of the terminal device matches time at which the terminal device receives the data transmitted by the network. In other words, a periodicity in which the network device transmits the data to the terminal device matches the PDCCH monitoring periodicity of the terminal device.

In S1501, the third indication information indicates the terminal device to skip monitoring PDCCH monitoring until a next PDCCH monitoring periodicity starts. Because the periodicity in which the network device transmits the data to the terminal device matches the PDCCH monitoring periodicity of the terminal device, the terminal device may receive, in the next PDCCH monitoring periodicity in time, data transmitted by the network device next time, and no data is transmitted in time in which the terminal device skips performing PDCCH monitoring, so that redundant time for PDCCH monitoring may be avoided, thereby reducing power consumption.

For example, in this embodiment of this application, the PDCCH monitoring periodicity may be an activation time period or an on Duration periodicity in the DRX technology. Alternatively, the PDCCH monitoring periodicity may be a PDCCH monitoring periodicity in a PDCCH monitoring technology, which may also be referred to as a Duration periodicity.

In this embodiment of this application, the network device may determine, based on a transmission status of transmitting data to the terminal device, whether to send the third indication information to the terminal device. For specific implementation in which the network device determines whether to send the third infication information to the terminal device, refer to the descriptions of S1001. Details are not described herein again.

Optionally, in this embodiment of this application, the third indication information may be carried in DCI.

In S1502, after receiving the third indication information, the terminal device skips performing, based on an indication of the third indication information, PDCCH monitoring until a next PDCCH monitoring periodicity starts. After the next PDCCH monitoring periodicity starts, the terminal device may continue to perform PDCCH monitoring.

Optionally, if the terminal device is still in the PDCCH monitoring periodicity currently when the terminal device receives the third indication information, the terminal device may skip performing, based on the third indication information, PDCCH monitoring in the current PDCCH monitoring periodicity until the next PDCCH monitoring periodicity starts. Certainly, when the terminal device currently does not perform PDCCH monitoring when the terminal device receives the third indication information, the terminal device may still continuously skip performing PDCCH monitoring based on the indication of the third indication information until the next PDCCH monitoring periodicity starts.

According to the power saving method provided in this embodiment of this application, the terminal device may skip performing PDCCH monitoring based on the indication of the third indication information until the next PDCCH monitoring periodicity starts. Therefore, in a scenario in which a data transmission periodicity matches the PDCCH monitoring periodicity of the terminal device, redundant PDCCH monitoring time is avoided as much as possible, thereby reducing power consumption.

Optionally, in this embodiment of this application, the data periodicity may be a non-integer value, for example, may be z ms, where z is a non-integer. Certainly, the technical solution in this embodiment of this application may still be applied when the periodicity of the data is an integer value.

In this embodiment of this application, when skipping performing PDCCH monitoring based on the third indication information, the terminal device needs to determine start time of the next PDCCH monitoring periodicity. In this case, the terminal device needs to obtain the PDCCH monitoring periodicity. In a possible implementation, the PDCCH monitoring periodicity or a parameter related to the PDCCH monitoring periodicity may be configured by the network device for the terminal device. For example, the network device includes, in RRC signaling sent by the network device to the terminal device, the PDCCH monitoring periodicity or the parameter related to the PDCCH monitoring periodicity. Certainly, the terminal device may alternatively obtain the PDCCH monitoring periodicity in another manner. A specific implementation in which the terminal device obtains the PDCCH monitoring periodicity is not limited in this embodiment of this application.

Optionally, the power saving method provided in this embodiment of this application may further include S1503.

S1503: The network device sends second configuration information to the terminal device, and correspondingly, the terminal device receives the second configuration information from the network device. The third indication information indicates to skip performing PDCCH monitoring based on the second configuration information until a next PDCCH monitoring periodicity starts.

When the power saving method provided in this embodiment of this application includes S1503, S1502 may be as follows: After the network device sends the third indication information to the terminal device, the terminal device may determine, under an indication of the third indication information, start time of a next PDCCH monitoring periodicity based on the second configuration information, and stop performing PDCCH monitoring until the next PDCCH monitoring periodicity starts. After the next PDCCH monitoring periodicity starts, the terminal device continues to perform PDCCH monitoring.

Optionally, in this embodiment of this application, the second configuration information may be a configured parameter indicating a candidate duration for PDCCH skipping, and the parameter represents skipping performing PDCCH monitoring until the next PDCCH monitoring periodicity starts. The network device may configure only the second configuration information to indicate the configured candidate duration for PDCCH skipping. Alternatively, in consideration of the scenario with a plurality of services mixed, in addition to configuring the second configuration information, the network device may further configure one or more fixed values as a candidate duration for PDCCH skipping, to indicate, based on data transmission statuses of different services, the terminal device to skip performing PDCCH monitoring based on the second configuration information until the next PDCCH monitoring periodicity starts, or indicates the terminal device to skip performing PDCCH monitoring in a configured duration with a fixed value.

For example, the second configuration information may be carried in the RRC signaling. For example, the second configuration information may be configured by using a PDCCHSkipDurationList-R17 field of the RRC signaling. For example, when the second configuration information is a parameter in the PDCCHSkipDurationList-R17 field, the second configuration information may be skip to next Monitoring Occasion. For another example, the second configuration information may be configured by using a newly defined field in the RRC signaling.

Optionally, in this embodiment of this application, the second configuration information may correspond to an SCS.

For example, it is assumed that the second configuration information corresponds to an SCS, the SCS may be 15 kHz, 30 kHz, 60 kHz, or 120 kHz, and three values of PDCCH skipping that are carried in the PDCCHSkipDurationList-R17 are respectively 1, 100, and the second configuration information. In this case, the PDCCHSkipDurationList-R17 field may be as follows:

{1, 100, skip to next Monitoring Occasion} slots for 15 kHz SCS, where the PDCCHSkipDurationList-R17 field corresponds to the SCS of 15 kHz; or
{1, 100, skip to next Monitoring Occasion} slots for 30 kHz SCS, where the PDCCHSkipDurationList-R17 field corresponds to the SCS of 30 kHz; or
{1, 100, skip to next Monitoring Occasion} slots for 60 kHz SCS, where the PDCCHSkipDurationList-R17 field corresponds to the SCS of 60 kHz; or
{1, 100, skip to next Monitoring Occasion} slots for 120 kHz SCS, where the PDCCHSkipDurationList-R17 field corresponds to the SCS of 120 kHz.

It should be noted that, when the foregoing describes the possible implementation of the second configuration information, a name of a field or a parameter in the field, for example, skip to next Monitoring Occasion is an example of a possible name provided in this embodiment of this application, and a specific name of the second configuration information is not limited in embodiments of this application.

The second configuration information is described above. How the terminal device skips performing PDCCH monitoring based on the second configuration information under the indication of the third indication information until a next PDCCH monitoring periodicity starts in this embodiment of this application is described in detail below.

Optionally, the terminal device may determine, based on the third indication information and a predefined mapping relationship, that information corresponding to the third indication information is the second configuration information, to determine, based on the second configuration information, that the terminal device needs to skip performing PDCCH monitoring until the next PDCCH monitoring periodicity starts.

In a possible implementation, the third indication information may be a PDCCH monitoring adaptation indication field. The terminal device may determine, based on a bit value of the PDCCH monitoring adaptation indication field and the predefined mapping relationship, information corresponding to the bit value of the PDCCH monitoring adaptation indication field. If the information corresponding to the bit value of the PDCCH monitoring adaptation indication field is the second configuration information, the terminal device determines start time of the next PDCCH monitoring periodicity, and skips performing PDCCH monitoring until the start time of the next PDCCH monitoring periodicity.

The following provides explanations with reference to specific examples. It is assumed that the third indication information is the PDCCH monitoring adaptation indication field, and the PDCCHSkipDurationList-R17 field is {1, 100, skip to next Monitoring Occasion}, where skip to next Monitoring Occasion is the second configuration information, and the second configuration information is a 3rd parameter in three parameters that are configured in the PDCCHSkipDuration-List-R17 field and that indicate the candidate duration for PDCCH skipping. The third indication information and indicated user equipment behaviors may be shown in Table 7 below:

**Table 7**

| PDCCH monitoring adaptation indication field | Indicated user equipment behaviors |
|---|---|
| One bit with a bit value of "0"; or two bits with a bit value of "00" | Perform PDCCH monitoring |
| One bit with a bit value of "1"; or two bits with a bit value of "01" | Skip performing PDCCH monitoring in a duration corresponding to a 1st parameter in a PDCCHSkipDurationList-R17 field |
| Two bits with a bit value of "10" | Skip performing PDCCH monitoring in a duration corresponding to a 2nd parameter in a PDCCHSkipDurationList-R17 field |
| Two bits with a bit value of "11" | Skip performing PDCCH monitoring in a duration corresponding to a 3rd parameter in a PDCCHSkipDurationList-R17 field |

As shown in Table 7, when the bit value of the PDCCH monitoring adaptation indication field is "11", the terminal device may determine, based on the correspondence shown in Table 7, to skip performing PDCCH monitoring, that is, skip performing monitoring in a duration corresponding to skip to next Monitoring Occasion, until the next PDCCH monitoring periodicity starts. Similarly, when the bit value of the PDCCH monitoring adaptation indication field is "0" or "00", the terminal device may determine, based on the correspondence shown in Table 7, that the terminal device does not need to skip performing PDCCH monitoring, and may continue to perform PDCCH monitoring. When the bit value of the PDCCH monitoring adaptation indication field is "1" or "01", the terminal device may determine, based on the correspondence shown in Table 3, that a duration in which PDCCH monitoring needs to be skipped is one slot. When the bit value of the PDCCH monitoring adaptation indication field is "10", the terminal device may determine, based on the correspondence shown in Table 7, that a duration in which PDCCH monitoring needs to be skipped is ten slots.

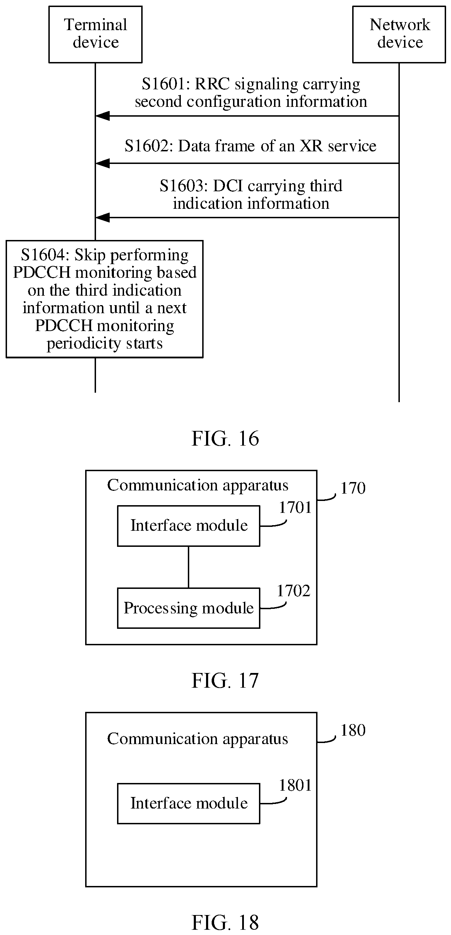

The following describes another example of a specific embodiment of the power saving method provided in this application. It is assumed that the data is a data frame of an XR service. In FIG. 16, the method is described by using an example in which a network device and a terminal device are entities for performing interaction. However, the entities for performing interaction are not limited in this application. For example, the network device in FIG. 16 may alternatively be a chip, a chip system, or a processor that supports the network device in implementing the method, or may be a logical module or software that can implement all or some functions of the network device. The terminal device in FIG. 16 may alternatively be a chip, a chip system, or a processor that supports the terminal device in implementing the method, or may be a logical module or software that can implement all or some functions of the terminal device. This embodiment includes S1601 to S1604.

S1601: The network device includes, in RRC signaling sent by the network device to the terminal device, second configuration information for configuring a candidate duration for PDCCH skipping, where the second configuration information indicates to skip performing PDCCH monitoring until a next PDCCH monitoring periodicity starts.

For specific implementation of S1601, refer to the descriptions of S1503. Details are not described herein again.

S1602: The network device transmits a data frame of the XR service to the terminal device.

S1603: The network device sends DCI to the terminal device, where the DCI carries third indication information, and the third indication information indicates the terminal device to skip performing PDCCH monitoring based on the second configuration information.

For specific implementation of S1603, refer to the descriptions of S1501 and S1503. Details are not described herein again.

S1604: The terminal device determines, based on the third indication information, that a duration in which PDCCH skipping needs to be performed this time is the candidate duration indicated by the second configuration information. The terminal device skips performing PDCCH monitoring until the next PDCCH monitoring periodicity starts.

For specific implementation of S1604, refer to the descriptions of S1501 and S1503. Details are not described herein again.

It may be understood that, in the foregoing embodiments, the method and/or steps implemented by the terminal device may alternatively be implemented by a component (for example, a chip or a circuit) that may be used in the terminal device. The method and/or steps implemented by the network device may alternatively be implemented by a component (for example, a chip or a circuit) that may be used in the network device.

The foregoing mainly describes the solutions provided in embodiments of this application from the perspective of interaction between devices. Correspondingly, an embodiment of this application further provides a communication apparatus, and the communication apparatus is configured to implement the foregoing methods. The communication apparatus may be the terminal device in the foregoing method embodiment, or an apparatus including the foregoing terminal device, or a component that may be used in the terminal device. Alternatively, the communication apparatus may be the network device in the foregoing method embodiment, or an apparatus including the foregoing network device, or a component that may be used in the network device. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

For example, the communication apparatus is the terminal device in the foregoing method embodiments. FIG. 17 is a diagram of a structure of a communication apparatus 170. The communication apparatus 170 includes an interface module 1701 and a processing module 1702. The interface module 1701 may also be referred to as a transceiver module. The transceiver unit is configured to implement a transceiver function. For example, the interface module may be a transceiver circuit, a transceiver machine, a transceiver, or a communication interface.

In a possible design, the interface module 1701 is configured to receive first indication information form the network device; and the processing module 1702 is configured to control, based on the first indication information, the apparatus to skip performing PDCCH monitoring in a first duration, where the first duration is related to a periodicity or frame rate of data.

In a possible design, the first duration is further related to at least one of the following: time at which the first indication information is received; or first reference time configured by the network device.

In a possible design, the first duration meets the following relationship: $X = a + ceil[(b-a)/\Delta t]^* \Delta t - b$, where $X$ represents the first duration, $a$ represents the first reference time, ceil represents rounding up, $b$ represents the time at which the first indication information is received, and $\Delta t$ represents the periodicity of the data.

In a possible design, the first duration meets the following relationship:
$$X = c + \text{Int}\{\text{ceil}[\frac{(d-c)*s}{y}] * \frac{y}{s}\} - d,$$
where $X$ represents the first duration, $c$ represents a slot index of the first reference time, Int represents rounding up or rounding down, ceil represents rounding up, $d$ represents a slot index of the time at which the first indication information is received, $y$ represents the periodicity of the data, and $s$ represents a slot length.

In a possible design, the first duration meets the following relationship:
$$X = e + \text{Int}\{\text{ceil}[\frac{(f-e)*q}{p}] * \frac{p}{q}\} - f,$$
where $X$ represents the first duration, $e$ represents a subframe index of the first reference time, Int represents rounding up or rounding down, ceil represents rounding up, $f$ represents a subframe index of the time at which the first indication information is received, $p$ represents the periodicity of the data, and $q$ represents a subframe length.

In a possible design, the interface module 1701 is further configured to receive first configuration information from the network device, where the first indication information indicates to skip performing PDCCH monitoring in the first duration based on the first configuration information.

In a possible design, the PDCCH includes information for scheduling the data.

In a possible design, the periodicity of the data is $z$ ms, where $z$ is a non-integer.

In this embodiment, the communication apparatus 170 is presented in a form of function modules obtained through division in an integrated manner. The module herein may be an ASIC, a circuit, a processor that executes one or more software or firmware programs, a memory, an integrated logic circuit, and/or another component capable of providing the foregoing functions.

In a simple embodiment, a person skilled in the art may figure out that the communication apparatus 170 may be in a form of the terminal device 80 shown in FIG. 8.

For example, the processor 1001 in the terminal device 80 shown in FIG. 8 may invoke the computer-executable instructions stored in the memory 1002, to enable the terminal device 80 to perform the power saving method in the foregoing method embodiments. Specifically, a function/implementation process of the interface module 1701 and the processing module 1702 in FIG. 15 may be implemented by the processor 1001 in the terminal device 80 shown in FIG. 8 by invoking the computer-executable instructions stored in the memory 1002. Alternatively, functions/implementation processes of the processing module 1702 in FIG. 15 may be implemented by the processor 1001 in the terminal device 80 shown in FIG. 8 by invoking the computer-executable instructions stored in the memory 1002. A function/implementation process of the interface module 1701 in FIG. 15 may be implemented through the transceiver 1003 in the terminal device 80 shown in FIG. 8.

The communication apparatus 170 provided in this embodiment may perform the foregoing power saving method. Therefore, for technical effects that can be achieved by the communication apparatus 170, refer to the foregoing method embodiments. Details are not described herein again.

For example, the communication apparatus is the network device in the foregoing method embodiments. FIG. 18 is a diagram of a structure of a communication apparatus 180. The communication apparatus 180 includes an interface module 1801. The interface module 1801 may also be referred to as a transceiver module. The transceiver unit is configured to implement a transceiver function. For example, the interface module may be a transceiver circuit, a transceiver machine, a transceiver, or a communication interface.

In a possible design, the interface module 1801 sends first indication information to a terminal device, where the first indication information indicates to skip performing PDCCH monitoring in a first duration, where the first duration is related to a periodicity or frame rate of data.

In a possible design, the first duration is further related to at least one of the following: time at which the first indication information is received; or first reference time configured by the network device.

In a possible design, the first duration meets the following relationship: X=a+ceil[(b-a)/Δt]*Δt-b, where X represents the first duration, a represents the first reference time, ceil represents rounding up, b represents the time at which the first indication information is received, and Δt represents the periodicity of the data.

$$X=c+Int\{ceil[\frac{(d-c)*s}{y}] * \frac{y}{s}\}-d$$,

In a possible design, the first duration meets the following relationship:
where X represents the first duration, c represents a slot index of the first reference time, Int represents rounding up or rounding down, ceil represents rounding up, d represents a slot index of the time at which the first indication information is received, y represents the periodicity of the data, and s represents a slot length.

$$X=e+Int\{ceil[\frac{(f-e)*q}{p}] * \frac{p}{q}\}-f$$,

In a possible design, the first duration meets the following relationship:
where X represents the first duration, e represents a subframe index of the first reference time, Int represents rounding up or rounding down, ceil represents rounding up, f represents a subframe index of the time at which the first indication information is received, p represents the periodicity of the data, and q represents a subframe length.

In a possible design, the interface module 1801 is further configured to send first configuration information to the terminal device, where the first indication information indicates to skip performing PDCCH monitoring in the first duration based on the first configuration information.

In a possible design, the PDCCH includes information for scheduling the data.

In a possible design, the periodicity of the data is z ms, where z is a non-integer.

In this embodiment, the communication apparatus 180 is presented in a form of functional modules obtained through division in an integrated manner. The module herein may be an ASIC, a circuit, a processor that executes one or more software or firmware programs, a memory, an integrated logic circuit, and/or another component capable of providing the foregoing functions.

In a simple embodiment, a person skilled in the art may figure out that the communication apparatus 180 may be in a form of the network device 90 shown in FIG. 8.

For example, the processor 901 in the network device 90 shown in FIG. 8 may invoke the computer-executable instructions stored in the memory 902, to enable the network device 90 to perform the power saving method in the foregoing method embodiments. Specifically, a function/implementation process of the interface module 1801 in FIG. 18 may be implemented by the processor 901 in the network device 90 shown in FIG. 8 by invoking the computer-executable instructions stored in the memory 902. Alternatively, functions/implementation processes of the interface module 1801 in FIG. 18 may be implemented by the transceiver 903 in the network device 90 shown in FIG. 8.

The communication apparatus 180 provided in this embodiment may perform the foregoing power saving method. Therefore, for technical effects that can be achieved by the communication apparatus 180, refer to the foregoing method embodiments. Details are not described herein again.

It should be noted that one or more of the foregoing modules or units may be implemented by software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system on chip) or an ASIC, or may be an independent semiconductor chip. In addition to the core configured to perform calculation or processing by executing a software instruction, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including: at least one processor and an interface, where the at least one processor is coupled to a memory by using an interface, and when the at least one processor executes a computer program or instructions in the memory, the method in any one of the foregoing method embodiments is performed. In a possible implementation, the communication apparatus further includes the memory. Optionally, the chip system may include a chip, or may include the chip and another discrete device. This is not specifically limited in this embodiment of this application.

All or some of the foregoing embodiments may be implemented by software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A communication method, wherein the method comprises:

   receiving first indication information from a network device; and
   skipping performing physical downlink control channel PDCCH monitoring in a first duration based on the first indication information, wherein the first duration is related to a periodicity or frame rate of data.

2. The method according to claim 1, wherein the first duration is further related to at least one of the following:

   time at which the first indication information is received; or
   first reference time configured by the network device.

3. The method according to claim 2, wherein the first duration meets the following relationship:

$$X=a+\text{ceil}[(b-a)/\Delta t]*\Delta t-b,$$

wherein
X represents the first duration, a represents the first reference time, ceil represents rounding up, b represents the time at which the first indication information is received, and $\Delta t$ represents the periodicity of the data.

4. The method according to claim 2, wherein the first duration meets the following relationship:

$$X=c+\text{Int}\{\text{ceil}[\frac{(d-c)*s}{y}]*\frac{y}{s}\}-d,$$

wherein
X represents the first duration, c represents a slot index of the first reference time, Int represents rounding up or rounding down, ceil represents rounding up, d represents a slot index of the time at which the first indication information is received, y represents the periodicity of the data, and s represents a slot length.

5. The method according to claim 2, wherein the first duration meets the following relationship:

$$X=e+\text{Int}\{\text{ceil}[\frac{(f-e)*q}{p}]*\frac{p}{q}\}-f,$$

wherein
X represents the first duration, e represents a subframe index of the first reference time, Int represents rounding up or rounding down, ceil represents rounding up, f represents a subframe index of the time at which the first indication information is received, p represents the periodicity of the data, and q represents a subframe length.

6. The method according to any one of claims 1 to 5, wherein the method further comprises:
receiving first configuration information from the network device, wherein the first indication information indicates to skip performing PDCCH monitoring in the first duration based on the first configuration information.

7. The method according to any one of claims 1 to 6, wherein the PDCCH comprises information for scheduling the data.

8. The method according to any one of claims 1 to 7, wherein the periodicity of the data is z ms, wherein z is a non-integer.

9. A communication method, wherein the method comprises:

sending first indication information to a terminal device, wherein
the first indication information indicates to skip performing physical downlink control channel PDCCH monitoring in a first duration, wherein the first duration is related to a periodicity or frame rate of data.

10. The method according to claim 9, wherein the first duration is further related to at least one of the following:

time at which the first indication information is received; or
first reference time configured by a network device.

11. The method according to claim 10, wherein the first duration meets the following relationship:

$$X=a+\text{ceil}[(b-a)/\Delta t]*\Delta t-b,$$

wherein
X represents the first duration, a represents the first reference time, ceil represents rounding up, b represents the time at which the terminal device receives the first indication information, and $\Delta t$ represents the periodicity of the data.

12. The method according to claim 10, wherein the first duration meets the following relationship:

$$X = c + \mathrm{Int}\left\{ \mathrm{ceil}\left[\frac{(d-c)*s}{y}\right] * \frac{y}{s}\right\} - d, \text{、}$$

wherein
X represents the first duration, c represents a slot index of the first reference time, Int represents rounding up or rounding down, ceil represents rounding up, d represents a slot index of the time at which the terminal device receives the first indication information, y represents the periodicity of the data, and s represents a slot length.

13. The method according to claim 10, wherein the first duration meets the following relationship:

$$X = e + \mathrm{Int}\left\{ \mathrm{ceil}\left[\frac{(f-e)*q}{p}\right] * \frac{p}{q}\right\} - f,$$

wherein
X represents the first duration, e represents a subframe index of the first reference time, Int represents rounding up or rounding down, ceil represents rounding up, f represents a subframe index of the time at which the first indication information is received, p represents the periodicity of the data, and q represents a subframe length.

14. The method according to any one of claims 9 to 13, wherein the method further comprises:
sending first configuration information to the terminal device, wherein the first indication information indicates to skip performing PDCCH monitoring in the first duration based on the first configuration information.

15. The method according to any one of claims 9 to 14, wherein the PDCCH comprises information for scheduling the data.

16. The method according to any one of claims 9 to 15, wherein the periodicity of the data is z ms, wherein z is a non-integer.

17. A communication apparatus, wherein the communication apparatus comprises an interface module and a processing module, wherein

the interface module is configured to receive first indication information from a network device; and
the processing module is configured to control, based on the first indication information, the apparatus to skip performing physical downlink control channel PDCCH monitoring in a first duration, wherein the first duration is related to a periodicity or frame rate of data.

18. The apparatus according to claim 17, wherein the first duration is further related to at least one of the following:

time at which the first indication information is received; or
first reference time configured by the network device.

19. The apparatus according to claim 18, wherein the first duration meets the following relationship:

$$X = a + \mathrm{ceil}[(b-a)/\Delta t] * \Delta t - b,$$

wherein
X represents the first duration, a represents the first reference time, ceil represents rounding up, b represents the time at which the first indication information is received, and $\Delta t$ represents the periodicity of the data.

20. The apparatus according to claim 18, wherein the first duration meets the following relationship:

$$X = c + \mathrm{Int}\left\{ \mathrm{ceil}\left[\frac{(d-c)*s}{v}\right] * \frac{y}{s}\right\} - d, \text{、}$$

wherein
X represents the first duration, c represents a slot index of the first reference time, Int represents rounding up or rounding down, ceil represents rounding up, d represents a slot index of the time at which the first indication information is received, y represents the periodicity of the data, and s represents a slot length.

21. The apparatus according to claim 18, wherein the first duration meets the following relationship:

$$X = e + Int\{ceil[\frac{(f-e)*q}{p}] * \frac{p}{q}\} - f,$$

wherein
X represents the first duration, e represents a subframe index of the first reference time, Int represents rounding up or rounding down, ceil represents rounding up, f represents a subframe index of the time at which the first indication information is received, p represents the periodicity of the data, and q represents a subframe length.

22. The apparatus according to any one of claims 17 to 21, wherein
the interface module is further configured to receive first configuration information from the network device, wherein the first indication information indicates to skip performing PDCCH monitoring in the first duration based on the first configuration information.

23. The apparatus according to any one of claims 17 to 22, wherein the PDCCH comprises information for scheduling the data.

24. The apparatus according to any one of claims 17 to 23, wherein the periodicity of the data is z ms, wherein z is a non-integer.

25. A communication apparatus, wherein the apparatus comprises an interface module, and

the interface module is configured to send first indication information to a terminal device, wherein
the first indication information indicates to skip performing physical downlink control channel PDCCH monitoring in a first duration, wherein the first duration is related to a periodicity or frame rate of data.

26. The apparatus according to claim 25, wherein the first duration is further related to at least one of the following:

time at which the first indication information is received; or
first reference time configured by the communication apparatus.

27. The apparatus according to claim 26, wherein the first duration meets the following relationship:

$$X = a + ceil[(b-a)/\Delta t] * \Delta t - b,$$

wherein
X represents the first duration, a represents the first reference time, ceil represents rounding up, b represents the time at which the terminal device receives the first indication information, and $\Delta t$ represents the periodicity of the data.

28. The apparatus according to claim 26, wherein the first duration meets the following relationship:

$$X = c + Int\{ceil[\frac{(d-c)*s}{y}] * \frac{y}{s}\} - d,$$

wherein
X represents the first duration, c represents a slot index of the first reference time, Int represents rounding up or rounding down, ceil represents rounding up, d represents a slot index of the time at which the terminal device receives the first indication information, y represents the periodicity of the data, and s represents a slot length.

29. The apparatus according to claim 26, wherein the first duration meets the following relationship:

$$X = e + \text{Int}\left\{ \text{ceil}\left[\frac{(f-e)*q}{p}\right] * \frac{p}{q}\right\} - f,$$

wherein
X represents the first duration, e represents a subframe index of the first reference time, Int represents rounding up or rounding down, ceil represents rounding up, f represents a subframe index of the time at which the first indication information is received, p represents the periodicity of the data, and q represents a subframe length.

30. The apparatus according to any one of claims 25 to 29, wherein
the interface module is further configured to send first configuration information to the terminal device, wherein the first indication information indicates to skip performing PDCCH monitoring in the first duration based on the first configuration information.

31. The apparatus according to any one of claims 25 to 30, wherein the PDCCH comprises information for scheduling the data.

32. The apparatus according to any one of claims 25 to 31, wherein the periodicity of the data is z ms, wherein z is a non-integer.

33. A communication apparatus, comprising a processor, wherein the processor is coupled to a memory, the memory is configured to store a program or instructions, and when the program or the instructions are executed by the processor, the apparatus is enabled to perform the method according to any one of claims 1 to 8, or the apparatus is enabled to perform the method according to any one of claims 9 to 16.

34. A computer-readable storage medium, storing computer instructions, wherein when the computer instructions are executed by a computer, the computer is enabled to perform the method according to any one of claims 1 to 8, or the computer is enabled to perform the method according to any one of claims 9 to 16.

Data frame

Ideal
arrival
case

5 ms

3 ms

Actual
arrival
case

FIG. 1

A terminal
device
performs
PDCCH
monitoring

on Duration

Inactive
time period

t

DRX cycle

FIG. 2

Monitoring periodicity

Offset by O slots | Continuously monitor for L slots

... | ... | ...

0 0 0 0 1 0 1 0 0 0 1 0 0 0

Number of time
domain symbols=2

FIG. 3

FIG. 4

on
Duration

16 ms

Data frame of
an XR service

16.67 ms

FIG. 5

EP 4 478 791 A1

FIG. 6

FIG. 7

FIG. 8

Terminal device 80

FIG. 9

Terminal device

Network device

S1001: First indication information

S1002: Skip performing PDCCH monitoring in a first duration based on the first indication information, where the first duration is related to a periodicity or frame rate of data

FIG. 10

Ideal arrival time     Ideal arrival time     Ideal arrival time

$Int(\frac{y}{s})$

$Int(\frac{2y}{s})$

X1

X2

$c$     $d1$     $c+Int(\frac{y}{s})$     $d2$     $c+Int(\frac{2y}{s})$

FIG. 11

```
┌──────────┐                                    ┌──────────┐
│ Terminal │                                    │ Network  │
│  device  │                                    │  device  │
└────┬─────┘                                    └────┬─────┘
     │         S1201: RRC signaling carrying        │
     │         first configuration information      │
     │◄─────────────────────────────────────────────│
     │                                              │
     │         S1202: Data frame of an XR service   │
     │◄─────────────────────────────────────────────│
     │                                              │
     │         S1203: DCI carrying first            │
     │         indication information               │
     │◄─────────────────────────────────────────────│
┌────┴──────────────┐                              │
│ S1204: Calculate  │                              │
│ a first           │                              │
│ duration based    │                              │
│ on the first      │                              │
│ indication        │                              │
│ information,      │                              │
│ and skip          │                              │
│ performing        │                              │
│ PDCCH monitoring  │                              │
│ in the            │                              │
│ first duration    │                              │
└────┬──────────────┘                              │
     │                                              │
```

FIG. 12

```
┌──────────┐                                          ┌──────────┐
│ Terminal │                                          │ Network  │
│  device  │                                          │  device  │
└────┬─────┘                                          └────┬─────┘
     │      S1301: RRC signaling carrying first            │
     │         configuration information and               │
     │◄──── configuration information that is for ──────────│
     │        a dense SSSG and a sparse SSSG               │
┌────┴────────────────────┐                               │
│ S1302: Perform PDCCH     │                               │
│ monitoring in search     │                               │
│ space in the sparse SSSG │                               │
└────┬────────────────────┘                               │
     │          S1303: DCI indicating to                   │
     │          switch to the dense SSSG and               │
     │◄──────── data frame of an XR service ───────────────│
┌────┴───────────────┐                                     │
│ S1304: Switch to   │                                     │
│ the dense SSSG      │                                     │
└────┬───────────────┘                                     │
     │       S1305: DCI carrying first                     │
     │◄───── indication information ───────────────────────│
┌────┴────────────────────┐                               │
│ S1306: Calculate a first │                               │
│ duration based on the    │                               │
│ first indication         │                               │
│ information, skip         │                               │
│ performing PDCCH          │                               │
│ monitoring in the first   │                               │
│ duration, and switch to   │                               │
│ the sparse SSSG           │                               │
└────┬────────────────────┘                               │
     │                                                     │
```

FIG. 13

FIG. 14

FIG. 15

Terminal
device

Network
device

S1601: RRC signaling carrying
second configuration information

S1602: Data frame of an XR service

S1603: DCI carrying third
indication information

S1604: Skip performing
PDCCH monitoring based
on the third indication
information until a next
PDCCH monitoring
periodicity starts

FIG. 16

Communication apparatus 170

Interface module 1701

Processing module 1702

FIG. 17

Communication apparatus 180

Interface module 1801

FIG. 18

## INTERNATIONAL SEARCH REPORT

| | International application No. |
|---|---|
| | **PCT/CN2023/090419** |

| | | |
|---|---|---|
| **A.** | **CLASSIFICATION OF SUBJECT MATTER** | |
| | H04W52/02(2009.01)i | |
| | According to International Patent Classification (IPC) or to both national classification and IPC | |

| **B.** | **FIELDS SEARCHED** |
|---|---|
| Minimum documentation searched (classification system followed by classification symbols) |
| IPC:H04W,H04Q,H04L |
| Documentation searched other than minimum documentation to the extent that such documents are included in the fields searched |
| Electronic data base consulted during the international search (name of data base and, where practicable, search terms used) |
| CNTXT, WPABS, ENTXTC, CNKI, 3GPP: 指示, 物理下行控制信道, 监听, 跳过, 时长, 周期, 帧率, 速率, 时隙, 索引, indicate, PDCCH, monitor, skipping, duration, period, frame, rate, fps, slot, index |

| **C.** | **DOCUMENTS CONSIDERED TO BE RELEVANT** | | |
|---|---|---|---|
| Category* | Citation of document, with indication, where appropriate, of the relevant passages | | Relevant to claim No. |
| X | CN 111867021 A (DATANG MOBILE COMMUNICATIONS EQUIPMENT CO., LTD.) 30 October 2020 (2020-10-30) description, paragraphs 133-452, and figures 1-7 | | 1, 2, 6-10, 14-18, 22-26, 30-34 |
| X | CN 114080033 A (SPREADTRUM COMMUNICATIONS (SHANGHAI) CO., LTD.) 22 February 2022 (2022-02-22) description, paragraphs 27-72, and figures 1-9 | | 1, 2, 6-10, 14-18, 22-26, 30-34 |
| X | CN 113453322 A (SPREADTRUM COMMUNICATIONS (SHANGHAI) CO., LTD.) 28 September 2021 (2021-09-28) description, paragraphs 46-99, and figures 1-7 | | 1, 2, 6-10, 14-18, 22-26, 30-34 |
| A | CN 110546982 A (BEIJING XIAOMI MOBILE SOFTWARE CO., LTD.) 06 December 2019 (2019-12-06) entire document | | 1-34 |
| A | CN 110839286 A (TELECOMMUNICATIONS TECHNOLOGY RESEARCH INSTITUTE CO., LTD.) 25 February 2020 (2020-02-25) entire document | | 1-34 |

| ✓ Further documents are listed in the continuation of Box C. | | ✓ See patent family annex. |
|---|---|---|

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **14 July 2023** | **20 July 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/090419** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 113412649 A (GUANGDONG OPPO MOBILE COMMUNICATIONS CO., LTD.) 17 September 2021 (2021-09-17)<br>    entire document | 1-34 |
| A | EP 3840483 A1 (GUANGDONG OPPO MOBILE TELECOMMUNICATIONS CORP., LTD.) 23 June 2021 (2021-06-23)<br>    entire document | 1-34 |

**INTERNATIONAL SEARCH REPORT**
Information on patent family members

International application No.

**PCT/CN2023/090419**

| Patent document cited in search report | | | Publication date (day/month/year) | Patent family member(s) | | | Publication date (day/month/year) |
|---|---|---|---|---|---|---|---|
| CN | 111867021 | A | 30 October 2020 | None | | | |
| CN | 114080033 | A | 22 February 2022 | None | | | |
| CN | 113453322 | A | 28 September 2021 | None | | | |
| CN | 110546982 | A | 06 December 2019 | WO | 2021016766 | A1 | 04 February 2021 |
| | | | | EP | 4007376 | A1 | 01 June 2022 |
| | | | | EP | 4007376 | A4 | 03 August 2022 |
| | | | | US | 2022256622 | A1 | 11 August 2022 |
| CN | 110839286 | A | 25 February 2020 | WO | 2020035060 | A1 | 20 February 2020 |
| CN | 113412649 | A | 17 September 2021 | None | | | |
| EP | 3840483 | A1 | 23 June 2021 | EP | 3840483 | A4 | 25 August 2021 |
| | | | | US | 2021176814 | A1 | 10 June 2021 |
| | | | | KR | 20210045406 | A | 26 April 2021 |
| | | | | KR | 102476538 | B1 | 13 December 2022 |
| | | | | JP | 2022501869 | A | 06 January 2022 |
| | | | | JP | 7238095 | B2 | 13 March 2023 |
| | | | | AU | 2018436721 | A1 | 25 March 2021 |
| | | | | TW | 202021391 | A | 01 June 2020 |
| | | | | WO | 2020034218 | A1 | 20 February 2020 |

Form PCT/ISA/210 (patent family annex) (July 2022)

**REFERENCES CITED IN THE DESCRIPTION**

**Patent documents cited in the description**

• CN 202210462537

• CN 202210962007